# EUROPEAN PATENT SPECIFICATION

(11) **EP 3 574 966 B1**
(45) Date of publication and mention of the grant of the patent: **11.11.2026**
(21) Application number: 18745479.8
(22) Date of filing: 17.01.2018
(51) Int. Cl.: A63F 13/358, A63F 13/332, A63F 13/335, A63F 13/352, A63F 13/497, A63F 13/56, A63F 13/822, A63F 13/92

(54) **PROCESSING METHOD FOR DISPLAYING DATA AT CLIENT, AND RELATED DEVICE**
VERARBEITUNGSVERFAHREN ZUR ANZEIGE VON DATEN BEI EINEM CLIENT UND ZUGEHÖRIGE VORRICHTUNG
PROCÉDÉ DE TRAITEMENT SERVANT À AFFICHER DES DONNÉES AU NIVEAU D'UN CLIENT, ET DISPOSITIF CONNEXE

(30) Priority: 25.01.2017 CN 201710060614
(43) Date of publication of application: 04.12.2019
(73) Proprietor: Tencent Technology (Shenzhen) Company Limited, Shenzhen, Guangdong 518057 (CN)
(72) Inventor: ZHANG, Zhenxing, Guangdong 518057, (CN); ZHANG, Ran, Shenzhen, Guangdong 518057, (CN); QIU, Bin, Shenzhen, Guangdong 518057, (CN); FANG, Zhongkang, Shenzhen, Guangdong 518057, (CN)
(74) Representative: Novagraaf International SA
(86) International application number: PCT/CN2018/072980
(87) International publication number: WO 2018/137524

(56) References cited:
- WO-A1-2009/073795
- CN-A- 104 915 542
- CN-A- 106 330 917
- CN-A- 106 693 367
- US-A1- 2006 259 579
- US-A1- 2012 005 316
- US-A1- 2014 267 429
- US-A1- 2014 274 379
- US-A1- 2014 335 949
- US-A1- 2015 367 238
- SHAIKH A ET AL: "On demand platform for online games", IBM SYSTEMS JOURNAL,, vol. 45, no. 1, 1 January 2003 (2003-01-01), pages 7 - 19, XP002492825, ISSN: 0018-8670
- GORLATCH SERGEI ET AL: "Enhancing Grids for Massively Multiplayer Online Computer Games", 1 January 2012, 12TH EUROPEAN CONFERENCE ON COMPUTER VISION, ECCV 2012; [LECTURE NOTES IN COMPUTER SCIENCE], PAGE(S) 466 - 477, ISBN: 978-3-642-36741-0, ISSN: 0302-9743, XP047548814
- KHAN HAMMAD ET AL: "Monitoring Large-Scale Location-Based Information Systems", 2014 IEEE 28TH INTERNATIONAL PARALLEL AND DISTRIBUTED PROCESSING SYMPOSIUM, IEEE, 25 May 2015 (2015-05-25), pages 1171 - 1181, XP033177631, ISSN: 1530-2075, [retrieved on 20150717], DOI: 10.1109/IPDPS.2015.91

## Description

This application claims priority to Chinese Patent Application No. 201710060614.2, titled "PROCESSING METHOD FOR DISPLAYING DATA AT CLIENT, SERVER, AND CLIENT" filed with Chinese Patent Office on January 25, 2017.

### FIELD OF THE TECHNOLOGY

The present disclosure relates to the technical field of computers, and in particular to a processing method for displaying data in a client and a related device.

### BACKGROUND OF THE DISCLOSURE

In a multiplayer online battle arena (MOBA) game, players in battles generally need to buy equipment. The players are usually grouped into two teams, and the two teams compete with each other in dispersed game maps. Each player controls selected roles by an interface having the style of a real-time strategy (RTS) game. In this type of game, organization units such as common building groups, resources, and trained troops in the RTS game are generally unnecessary to be operated, and the player can complete battles by only controlling the selected roles.

In a design implementation process of the MOBA game, a design manner of a frame synchronization game is used in the conventional technology. The frame synchronization game is different from a conventional status synchronization game. In the frame synchronization game, an input operation of a player functions as a synchronization dimension, it is unnecessary to synchronize statuses, and only operations are synchronized. After all clients receive operations, the clients may achieve synchronization through calculation. As an example, document "On demand platform for online games" (Shaikh A. et al., IBM SYSTEMS JOURNAL, 2003) discloses that the game server may compute the full state of the game based on player and object updates received from clients, and then transmit a relevant view of the new state to each player, according to a fixed 100-ms processing cycle. US 2014/0335949 A1 and US 2014/0274379 A1 each discloses on-demand distribution of client-generated object state update by a server. In this case, even if a data amount is increased, a synchronization amount is not increased accordingly. Document "Monitoring Large-Scale Location-Based Information Systems" (Khan H. et al., IEEE International Symposium on Parallel and Distributed Processing, 2015) discloses a non-intrusive monitoring middleware that addresses the challenges associated with monitoring the state of a distributed virtual world by dynamically partitioning the geographic map (e.g., of the virtual world or the game) in terms of map objects and (expected) state changes. US 2012/0005316 A1 discloses a computing system that is configured to execute a computer program on a server and to provide a video stream of the program output to a geographically remote client over a communication network. US 2006/0259579 A1 discloses a solution for managing communicative interactions between network elements.

In the MOBA game designed by using the frame synchronization, a fighting client can perform a game battle function by consuming a little traffic. However, for the MOBA game designed by using the frame synchronization, a relatively long time is required to be waited to start game battle watching, and a longer time is required to be waited to start game battle watching if the game battle starts for a longer time. Next, detailed descriptions are provided. In the frame synchronization game, a server buffers battle data simply according to a timestamp sequence. For example, if the server receives a battle watching request from a client at a time instant t₁, the server sends data packets generated from 0 to t₀ to the client, where t₀ is a time instant earlier than t₁. The client starts to simulate battles from the first received data packet, and restores the battlefield until the simulation maintains to the time instant t₀. A larger data amount indicates a longer time required for simulating the calculation.

Assuming that a time required by the client to load resources is △t, a speed for simulating the battle when the battlefield is restored is n times a normal rendering speed, and a time instant when battle watching is initiated is tₓ. To prevent cheating through the battle watching, the battle watching is available only after a period of time since the battle starts. Usually, tₓ is greater than 60 seconds. The client is required to complete battle simulation of the tₓ seconds for restoring the battlefield. A response time may be represented as t=△t+tₓ/n, where tₓ≥60 seconds. Assuming that the client simulates the battle at a high speed that is ten times the normal rendering speed and the player starts battle watching when the battle can be watched after one minute since the battle starts, the player needs to wait for at least (6+△t) seconds. The waiting time can be shortened only if the speed of simulating the battle is increased when the battlefield is restored. This cannot be completed by a client with relatively weak calculation performance.

Therefore, in a game battle watching solution implemented based on frame synchronization data according to the conventional technology, no matter when the player watches the battle, the client pulls, from the server, all frame synchronization data packets stored after the battle starts, resulting in a problem that the client is required to wait for a long time after initiating the battle watching.

### SUMMARY

The invention is defined in the appended claims. According to embodiments of the present disclosure, a processing method for displaying data in a client and a related device are provided, to save latency during data displaying of a client.

To resolve the foregoing technical problem, the following technical solutions are provided according to the embodiments of the present disclosure.

According to a first aspect, a processing method for displaying data in a client is provided according to an embodiment of the present disclosure, which includes:
receiving, by a data providing server, scenario resource data sent by an interactive application server after an interactive scenario is created, wherein the scenario resource data is basic data necessary for creating the interactive scenario;
periodically receiving, by the data providing server, snapshot data sent by the interactive application server according to a preset snapshot period, wherein the snapshot data is object status data generated by the interactive application server for a status of all objects displayed in the interactive scenario;
receiving, by the data providing server, a data load request sent by a data display client;
sending, by the data providing server, the scenario resource data to the data display client in response to the data load request;
sending, by the data providing server, the snapshot data to the data display client; and
sending, by the data providing server, if the data providing server buffers object interaction data generated by the interactive application server, the object interaction data to the data display client, wherein
the object interaction data is real-time network uplink and downlink data that is generated by the interactive application server based on an object interaction behavior in the interaction scenario,
wherein if the data providing server receives, at a first time instant, the data load request sent by the data display client, the sending, by the data providing server, the scenario resource data to the data display client in response to the data load request comprises:
   sending, by the data providing server, the scenario resource data to the data display client in real time after receiving the data load request at the first time instant, wherein the sending, by the data providing server, the snapshot data to the data display client comprises:
   determining, by the data providing server, whether the first time instant is a snapshot sending time instant when the interactive application server sends snapshot data;
   sending, by the data providing server if the first time instant is the snapshot sending time instant, to the data display client, the snapshot data sent by the interactive application server at the first time instant;
   waiting, by the data providing server, from the first time instant if the first time instant is not the snapshot sending time instant, until snapshot data sent by the interactive application server at a latest snapshot sending time instant after the first time instant is received; and
   sending, by the data providing server, to the data display client, the snapshot data sent by the interactive application server at the latest snapshot sending time instant after the first time instant,
      or
   wherein if the data providing server receives, at a second time instant, a data load request comprising a playback time instant that is sent by the data display client, the playback time instant being earlier than the second time instant, the sending, by the data providing server, the snapshot data to the data display client comprises:
      determining, by the data providing server, whether the playback time instant is a snapshot sending time instant when the interactive application server sends snapshot data;
      sending, by the data providing server if the playback time instant is the snapshot sending time instant, to the data display client, the snapshot data sent by the interactive application server at the playback time instant;
      backtracking, by the data providing server if the playback time instant is not the snapshot sending time instant, in a time axis from the playback time instant to find a snapshot sending time instant closest to the playback time instant, obtaining snapshot data sent by the interactive application server at the snapshot sending time instant closest to the playback time instant, the closest snapshot sending time instant being earlier than the playback time instant; and
      sending, by the data providing server, to the data display client, the snapshot data sent by the interactive application server at the snapshot sending time instant closest to the playback time instant.

According to a second aspect, a processing method for displaying data in a client is further provided according to an embodiment of the present disclosure, which includes:
sending, by a data display client, a data load request to a data providing server;
receiving, by the data display client, scenario resource data sent by the data providing server, and creating an interactive scenario based on the scenario resource data, wherein the scenario resource data is basic data necessary for creating the interactive scenario, and is sent to the data providing server by an interactive application server after the interactive scenario is created;
receiving, by the data display client, snapshot data sent by the data providing server, and loading the snapshot data in the interactive scenario, wherein the snapshot data is sent to the data providing server by the interactive application server according to a preset snapshot period, and is object status data generated by the interactive application server for a status of all objects displayed in the interactive scenario; and
periodically receiving, by the data display client, object interaction data sent by the data providing server, and simulating an object interaction process in the interactive scenario based on the object interaction data, wherein the object interaction data is sent to the data providing server by the interactive application server, and is real-time network uplink and downlink data that is generated by the interactive application server based on an object interaction behavior in the interactive scenario,
wherein if the data providing server receives, at a first time instant, the data load request sent by the data display client, the receiving, by the data display client, snapshot data sent by the data providing server comprises:
   receiving, by the data display client if the first time instant is a snapshot sending time instant, from the data providing server, snapshot data sent by the interactive application server at the first time instant; and
   receiving, by the data display client if the first time instant is not the snapshot sending time instant, from the data providing server, snapshot data sent by the interactive application server at a latest snapshot sending time instant after the first time instant,
      or
   wherein the sending, by a data display client, a data load request to a data providing server comprises:
      sending, by the data display client, a data load request comprising a playback time instant to the data providing server,
      and wherein if the data providing server receives the data load request comprising the playback
      time instant at a second time instant, the receiving, by the data display client, snapshot data sent by the data providing server comprises:
         receiving, by the data display client if the playback time instant is the snapshot sending time instant, from the data providing server, snapshot data sent by the interactive application server at the playback time instant; and
         receiving, by the data display client if the playback time instant is not the snapshot sending time instant, from the data providing server, snapshot data sent by the interactive application server at a snapshot sending time instant closest to the playback time instant, where the closest snapshot sending time instant is earlier than the playback time instant.

According to a third aspect, a data providing server is further provided according to an embodiment of the present disclosure. The data providing server includes a memory, a network interface and a processor.

The memory is configured to store computer executable program codes. The processor is coupled to the memory and the network interface. The program codes include instructions, and when the processor executes the instructions, the instructions cause the data providing server to perform the method performed by the data providing server described above.

According to a fourth aspect, a computer storage medium storing computer software instructions is further provided according to an embodiment of the present disclosure. The computer software instructions are executed to perform the method performed by the data providing server described above.

According to a fifth aspect, a terminal is further provided according to an embodiment of the present disclosure. The terminal includes a memory, a transceiver and a processor.

The memory is configured to store computer executable program codes. The processor is coupled to the memory and the transceiver. The program codes include instructions, and when the processor executes the instructions, the instructions cause the terminal to perform the method performed by the data display client described above.

According to an sixth aspect, a computer storage medium storing computer software instructions is further provided according to an embodiment of the present disclosure. The computer software instructions are executed to perform the method performed by the data display client described above.

As can be seen from the foregoing technical solutions, the embodiments of the present disclosure have the following advantages.

In the embodiments of the present disclosure, a server synchronizes with a client, an interactive application server sends scenario resource data and periodically generated snapshot data to a data providing server, and the data providing server sequentially sends the scenario resource data, the snapshot data, and object interaction data to a data display client, to ensure that a user can operate the data display client at any time instant to initiate data display. The data display client may create an interactive scenario based on the scenario resource data after receiving the scenario resource data, may load the snapshot data in the interactive scenario after receiving the snapshot data, and may simulate an object interaction process in the interactive scenario based on the object interaction data after receiving the object interaction data. In the embodiment of the present disclosure, the interactive application server classifies the data in the interactive scenario into three different types of data, and all types of data is sequentially loaded. Therefore, the data display client can rapidly restore interactions of simulation objects in the interactive scenario, so that the user can smoothly view interaction processes of the simulation objects in the interactive scenario, thereby resolving the problem in the conventional technology that the client is required to wait for a long time.

### BRIEF DESCRIPTION OF THE DRAWINGS

To more clearly describe technical solutions in embodiments of the present disclosure, accompanying drawings required in describing the embodiments are briefly introduced below. Apparently, the following accompanying drawings describe only some embodiments of the present disclosure, and a person skilled in the art can derive other accompanying drawings from the accompanying drawings.
FIG.1 is a schematic architectural diagram of a communication system according to an embodiment of the present disclosure;
FIG.2 is a schematic flowchart of a processing method for displaying data in a client according to an embodiment of the present disclosure;
FIG.3 is a schematic flowchart of another processing method for displaying data in a client according to an embodiment of the present disclosure;
FIG.4 is a schematic diagram of an interaction process between a data providing server and an interactive application server according to an embodiment of the present disclosure;
FIG.5 is a schematic diagram of a storage structure of scenario resource data, two pieces of snapshot data, and object interaction data according to an embodiment of the present disclosure;
FIG.6 is a schematic diagram of an interaction process between a data providing server and two data display clients according to an embodiment of the present disclosure;
FIG.7 is a schematic diagram of a storage structure of scenario resource data, n pieces of snapshot data, and object interaction data according to an embodiment of the present disclosure;
FIG.8 is a schematic flowchart of implementing data playback by a data display client according to an embodiment of the present disclosure;
FIG.9 is a schematic structural diagram of a data providing server according to an embodiment of the present disclosure;
FIG.10 is a schematic structural diagram of a first sending module according to an embodiment of the present disclosure;
FIG.11 is a schematic structural diagram of another first sending module according to an embodiment of the present disclosure;
FIG.12 is a schematic structural diagram of a second sending module according to an embodiment of the present disclosure;
FIG.13 is a schematic structural diagram of a data display client according to an embodiment of the present disclosure;
FIG.14 is a schematic structural diagram of another data providing server according to an embodiment of the present disclosure; and
FIG.15 is a schematic structural diagram of another data display client according to an embodiment of the present disclosure.

### DESCRIPTION OF EMBODIMENTS

According to embodiments of the present disclosure, a processing method for displaying data in a client device and a related device are provided, to resolve the problem that the client device is required to wait for a long time.

To make the inventive objective, features, and advantages of the present disclosure more obvious and understandable, the technical solutions in the embodiments of the present disclosure are described clearly and completely with reference to the accompanying drawings in the embodiments of the present disclosure hereinafter. Apparently, the embodiments described below are merely some rather than all of the embodiments of the present disclosure. All other embodiments obtained by a person of ordinary skill in the art based on the embodiments of the present disclosure shall fall within the protection scope of the present disclosure.

In the specification, claims, and accompanying drawings of the present disclosure, terms "include", "comprise" and any other variants thereof intend to be inclusive, so that a process, method, system, product, or device that includes a series of units is not necessarily limited to those units, but may include other units not clearly listed or inherent to such a process, method, product, or device.

Detailed descriptions are separately provided below.

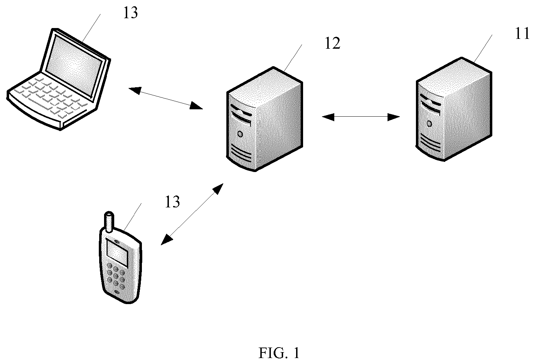

The processing method for displaying data in a client provided in the embodiments of the present disclosure is applied to a communication system. Reference is made to FIG.1, which is a schematic architectural diagram of a communication system. The communication system includes an interactive application server 11, a data providing server 12, and a data display client 13. In the embodiment of the application, the data display client 13 includes, but is not limited to, a mobile phone, a computer, a notebook computer, a handheld computer, and the like. Functions of the data providing server 12 and functions of the interactive application server 11 in the embodiment of the application may be integrated in a device. Alternatively, the data providing server 12 and the interactive application server 11 may be deployed separately. In an actual application, specific implementations are not limited in the application. In the embodiment of the application, an example in which the data providing server 12 and the interactive application server 11 are deployed separately is used for description.

The interactive application server 11 sends data to the data providing server 12, the data display client 13 interacts with the data providing server 12, and the data providing server 12 provides the data for the data display client 13, to be locally displayed in a client. For example, in an interactive scenario, the interactive application server generates various types of data, and sends the data to the data display client via the data providing server, and the data display client may locally display the data. For example, in the embodiment of the present disclosure, the interactive scenario may refer to a game scenario, or may refer to an operating scenario of an application program, such as an application operating scenario of office software, or an application operating scenario of roles. Taking the game scenario as an example, a MOBA game such as League of Legends provides an online battle watching function, and a battle watching client is required to wait for a long time before entering a battle watching state at a certain time instant. In the embodiment of the present disclosure, an example in which the interactive scenario is a game scenario is used. The data display client 13 may be a battle watching client, the data providing server 12 may be a battle watching server, and the interactive application server 11 may be a game server. The game server classifies all data in the game scenario into three types: scenario resource data, snapshot data, and object interaction data. The game server and the battle watching server maintain data synchronization. The battle watching server receives the scenario resource data, the snapshot data, and the object interaction data from the game server. The battle watching server sends the scenario resource data, the snapshot data, and the object interaction data sequentially to the battle watching client, so that the battle watching client can rapidly enter the battle watching state locally, and display game data to users.

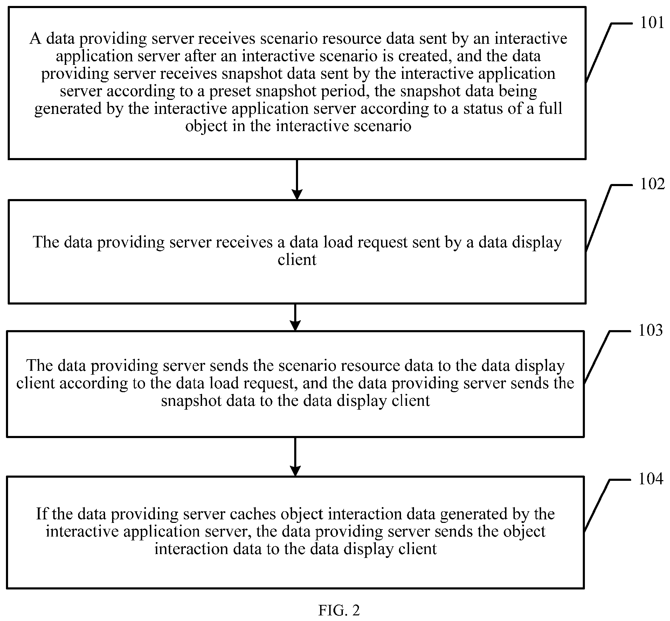

Next, the processing method for displaying data in a client provided in the embodiments of the present disclosure is described separately from the perspective of the data providing server and the data display client. First, description is provided from the perspective of the data providing server. Referring to FIG.2, the processing method for displaying data in a client according to an embodiment of the present disclosure may include the following steps 101 to 104.

In step 101, a data providing server receives scenario resource data sent by an interactive application server after an interactive scenario is created, and the data providing server receives snapshot data sent by the interactive application server according to a preset snapshot period. The snapshot data is generated by the interactive application server based on a status of a full object in the interactive scenario.

In the embodiment of the present disclosure, the data providing server is a server providing data for a data display client, and data buffered in the data providing server is from the interactive application server. In the embodiment of the present disclosure, the interactive application server provides an interaction application function for an interactive application client. For example, the interactive scenario is a game scenario or an application operating scenario. The interactive application server classifies all data in the interactive scenario into three types: scenario resource data, snapshot data, and object interaction data.

The scenario resource data is pre-loaded data (which may be briefly referred to as Pre), and is basic data necessary for creating the interactive scenario. In response to one data load request initiated by the data display client, only one interactive scenario is required to be created. The scenario resource data is data necessary for a bottom layer of the interactive scenario. For example, by using the game scenario as an example, the scenario resource data is data that is required to be delivered by the battle watching client each time during battle watching, and the scenario resource data is only required to be loaded once for watching one battle, so as to load battlefield resources by the battle watching client, such as map resources, hero model resources, and monster model resources.

In the embodiment of the present disclosure, the snapshot data is generated by the interactive application server based on the status of the full object in the interactive scenario, and the interactive application server generates the snapshot data according to the preset snapshot period. Therefore, the snapshot data is also periodically sent to the data providing server by the interactive application server. The snapshot data (which may be briefly referred to as Snap) is object status data generated by the interactive application server for the status of the full object in the interactive scenario. The full object refers to all objects displayed in the interactive scenario. These objects include a simulation object, a non-control object, and the like. By using the game scenario as an example, the status of the full object may include positions and battle attributes of objects such as fighting roles, defense towers, soldiers, and wild monsters, and equipment, money, and battle statistical data of all fighting roles. The interactive application server regularly snapshots the full object in the interactive scenario according to the snapshot period, so that status data of the full object can be obtained, and the snapshot data may be used to restore the status of the full object in the interactive scenario. For example, by using the game scenario as an example, Snap is status data of a full object in a battlefield at a certain time instant, and is used by the battle watching client to restore a battlefield status. Snap is regularly generated by a battle server (also referred to as a game server). Since the status of the full object in the battlefield changes all the time, Snaps generated at different time instants are different.

In the embodiment of the present disclosure, the interactive application server further generates object interaction data based on an object interaction behavior in the interactive scenario. The object interaction data is real-time network uplink and downlink data, and is generated after the interactive application server performs uplink and downlink interactions with the interactive application client. For example, the interactive application server generates the object interaction data in real time according to a frame synchronization interval. The object interaction data (which may be referred to as Act) generated by the interactive application server is sent to the data providing server in real time. Act is all uplink and downlink network interaction data within one frame of the battle server, and is used by the battle watching client to simulate a battle process after restoring the battlefield status. The battle server may forward Act to the battle watching server in real time. Snap differs from Act in that: Snap is full data and is the basis for restoring the battlefield status, and Act may be considered as incremental data and is the basis for simulating a battle behavior after the battlefield status is restored.

In the embodiment of the present disclosure, the interactive application server provides an interactive service for the interactive application client. The interactive application server first creates the interactive scenario, generates the scenario resource data, and sends the scenario resource data to the data providing server. The interactive application server generates the snapshot data according to the preset snapshot period, and sends the snapshot data to the data providing server. Both the scenario resource data and the snapshot data are buffered in the data providing server, so that the data providing server can provide a data display service for the data display client.

In step 102, the data providing server receives a data load request sent by the data display client.

In the embodiment of the present disclosure, when the data display client is required to locally display the interactive scenario, the data display client may send the data load request to the data providing server. The data providing server receives the data load request sent by the data display client. The data providing server may determine, in response to the data load request, that a user needs to display the interactive scenario, and then the data providing server performs subsequent step 103.

In step 103, the data providing server sends the scenario resource data to the data display client in response to the data load request, and the data providing server sends the snapshot data to the data display client.

In the embodiment of the present disclosure, the data providing server obtains the scenario resource data from the interactive application server, and obtains snapshot data generated at different snapshot generating time instants. When the data display client sends the data load request, the data providing server may immediately send the scenario resource data to the data display client, so that the data display client immediately starts to create the interactive scenario based on the scenario resource data, thereby shortening a time period during which the user waits for data to be loaded. In the embodiment of the present disclosure, the data providing server further sends the snapshot data to the data display client, so that the data display client loads the snapshot data in the interactive scenario, and restores the status of the full object in the interactive scenario. Then, step 104 is performed.

In some embodiments of the present disclosure, if the data providing server receives, at a first time instant, the data load request sent by the data display client, the process of sending the scenario resource data to the data display client by the data providing server in response to the data load request in step 103 includes step A1.

In step A1, the data providing server sends the scenario resource data to the data display client in real time after receiving the data load request at the first time instant.

If in step 102, the data providing server receives, at the first time instant, the data load request sent by the data display client, the data providing server sends the scenario resource data to the data display client in real time after receiving the data load request at the first time instant, thereby shortening a data transmission time as much as possible, so that the data display client can start to create the interactive scenario as soon as possible. The process of sending the scenario resource data to the data display client in real time may include that: the data providing server starts to send the scenario resource data on receipt of the data load request at the first time instant.

Further, in some other embodiments of the present disclosure, the process of sending the snapshot data to the data display client by the data providing server in step 103 includes steps B1 to B4.

In step B1, the data providing server determines whether the first time instant is a snapshot sending time instant when the interactive application server sends the snapshot data.

In step B2, if the first time instant is the snapshot sending time instant, the data providing server sends, to the data display client, the snapshot data sent by the interactive application server at the first time instant.

In step B3, the data providing server waits from the first time instant if the first time instant is not the snapshot sending time instant, until snapshot data sent by the interactive application server at a latest snapshot sending time instant after the first time instant is received.

In step B4, the data providing server sends, to the data display client, the snapshot data sent by the interactive application server at the latest snapshot sending time instant after the first time instant.

The interactive application server sends the snapshot data regularly according to the snapshot period. A time instant when the interactive application server sends snapshot data is defined as a snapshot sending time instant. Multiple snapshot sending time instants may exist according to the preset snapshot period. If the first time instant is the snapshot sending time instant, the data providing server receives the snapshot data sent by the interactive application server at the first time instant. The data providing server may send, to the data display client, the snapshot data sent by the interactive application server at the first time instant, so that the data display client loads the snapshot data in the interactive scenario as soon as possible, and restores the status of the full object in the interactive scenario. If the first time instant is not the snapshot sending time instant, it is indicated that the interactive application server does not send latest snapshot data at the first time instant, and the data providing server waits from the first time instant, until the snapshot data sent by the interactive application server at the latest snapshot sending time instant after the first time instant is received. If the data providing server receives the latest snapshot data, the data providing server sends, to the data display client, the snapshot data sent by the interactive application server at the latest snapshot sending time instant after the first time instant. For example, the snapshot period for generating the snapshot data by the interactive application server is 5 seconds. If the data providing server receives the data load request right at a second second, the data providing server is required to wait for 3 seconds. If the data providing server receives snapshot data of next 5 seconds, the data providing server sends the snapshot data of the next 5 seconds to the data display client, so that the data display client can restore the interactive scenario after waiting for at most three seconds. Compared with the scenario restoring performed in a frame synchronization manner in the conventional technology, a waiting time of the user is greatly shortened.

In some embodiments of the present disclosure, the data providing server receives, at a second time instant, a data load request including a playback time instant that is sent by the data display client. The playback time instant is earlier than the second time instant. If in step 102, the data providing server receives, at the second time instant, the data load request including the playback time instant that is sent by the data display client, it is indicated that the data display client is required to load data sent at the playback time instant, and the process of sending the snapshot data to the data display client by the data providing server in step 103 includes steps C1 to C4.

In step C1, the data providing server determines whether the playback time instant is a snapshot sending time instant when the interactive application server sends snapshot data.

In step C2, if the playback time instant is the snapshot sending time instant, the data providing server sends, to the data display client, the snapshot data sent by the interactive application server at the playback time instant.

In step C3, if the playback time instant is not the snapshot sending time instant, the data providing server backtracks in a time axis from the playback time instant to find a snapshot sending time instant closest to the playback time instant, and obtains snapshot data sent by the interactive application server at the snapshot sending time instant closest to the playback time instant.

In step C4, the data providing server sends, to the data display client, the snapshot data sent by the interactive application server at the snapshot sending time instant closest to the playback time instant.

The interactive application server sends the snapshot data regularly according to the snapshot period. A time instant when the interactive application server sends snapshot data is defined as a snapshot sending time instant. Multiple snapshot sending time instants may exist according to the preset snapshot period. If the playback time instant is the snapshot sending time instant, the data providing server buffers the snapshot data sent by the interactive application server at the playback time instant. The data providing server may send, to the data display client, the snapshot data sent by the interactive application server at the playback time instant, so that the data display client loads the snapshot data in the interactive scenario as soon as possible, and restores the status of the full object in the interactive scenario. If the playback time instant is not the snapshot sending time instant, it is indicated that the interactive application server does not send the snapshot data at the playback time instant, and the data providing server backtracks from the playback time instant to find the closest snapshot sending time instant, and obtains the snapshot data sent by the interactive application server at the snapshot sending time instant closest to the playback time instant. The data providing server sends, to the data display client, the snapshot data sent by the interactive application server at the snapshot sending time instant closest to the playback time instant. For example, the snapshot period for generating the snapshot data by the interactive application server is 5 seconds. If the data display client is required to play back data sent at a certain time instant, and the data providing server does not buffer the snapshot data sent at the certain time instant, the data providing server backtracks in a time axis from the playback time instant to find the snapshot sending time instant closest to the playback time instant, and obtains the snapshot data sent by the interactive application server at the snapshot sending time instant closest to the playback time instant. The data display client is required to wait during a time period between the snapshot sending time instant closest to the playback time instant and the playback time instant. The data display client can rapidly restore the interactive scenario. Compared with the scenario restoring performed in a frame synchronization manner in the conventional technology, the waiting time of the user is greatly shortened.

In step104, if the data providing server buffers object interaction data generated by the interactive application server, the data providing server sends the object interaction data to the data display client.

In the embodiment of the present disclosure, as can be known from the foregoing descriptions, the data providing server buffers the object interaction data generated by the interactive application server, and the data providing server may further send the object interaction data to the data display client, so that the data display client simulates an object interaction process in the interactive scenario based on the object interaction data, and the data display client displays the simulated object interaction process in the interactive scenario. The user may watch the simulated object interaction process. In the embodiment of the present disclosure, the interactive application server classifies the data in the interactive scenario into three different types of data, and all types of data is sequentially loaded. Therefore, the data display client can rapidly restore the interactive scenario and restore interactions of simulation objects, so that the user can smoothly view interaction processes of the simulation objects in the interactive scenario, thereby resolving the problem in the conventional technology that the client is required to wait for a long time.

Further, in some other embodiments of the present disclosure, in the foregoing implementation scenarios in which step C1 to step C4 are performed, the process of sending the object interaction data to the data display client by the data providing server in step 104 includes steps D1 and D2.

In step D1, if the playback time instant is the snapshot sending time instant, the data providing server sends, to the data display client, object interaction data to be sent by the interactive application server from the playback time instant.

In step D2, if the playback time instant is not the snapshot sending time instant, the data providing server sends, to the data display client, object interaction data to be sent by the interactive application server from the snapshot sending time instant closest to the playback time instant.

The interactive application server generates the object interaction data based on the object interaction behavior in the interactive scenario. The object interaction data is real-time network uplink and downlink data, and is generated after the interactive application server performs uplink and downlink interactions with the interactive application client. When the data display client requests data playback, step C1 is performed; if the playback time instant is the snapshot sending time instant, the data providing server sends, to the data display client, the object interaction data to be sent by the interactive application server from the playback time instant; and if the playback time instant is not the snapshot sending time instant, the data providing server sends, to the data display client, the object interaction data to be sent by the interactive application server from the snapshot sending time instant closest to the playback time instant, so that the data display client can receive multiple pieces of object interaction data from the data providing server, and the data display client can simulate the object interaction process in the interactive scenario.

As can be known from the above schematic embodiments of the present disclosure, in the embodiment of the present disclosure, a server synchronizes with a client, an interactive application server sends scenario resource data and periodically generated snapshot data to a data providing server, and the data providing server sequentially sends the scenario resource data, the snapshot data, and object interaction data to a data display client, to ensure that a user can operate the data display client at any time instant to initiate data display. The data display client may create an interactive scenario based on the scenario resource data after receiving the scenario resource data, may load the snapshot data in the interactive scenario after receiving the snapshot data, and may simulate an object interaction process in the interactive scenario based on the object interaction data after receiving the object interaction data. In the embodiment of the present disclosure, the interactive application server classifies the data in the interactive scenario into three different types of data, and all types of data is sequentially loaded. Therefore, the data display client can rapidly restore interactions of simulation objects in the interactive scenario, so that the user can smoothly view interaction processes of the simulation objects in the interactive scenario, thereby resolving the problem in the conventional technology that the client is required to wait for a long time.

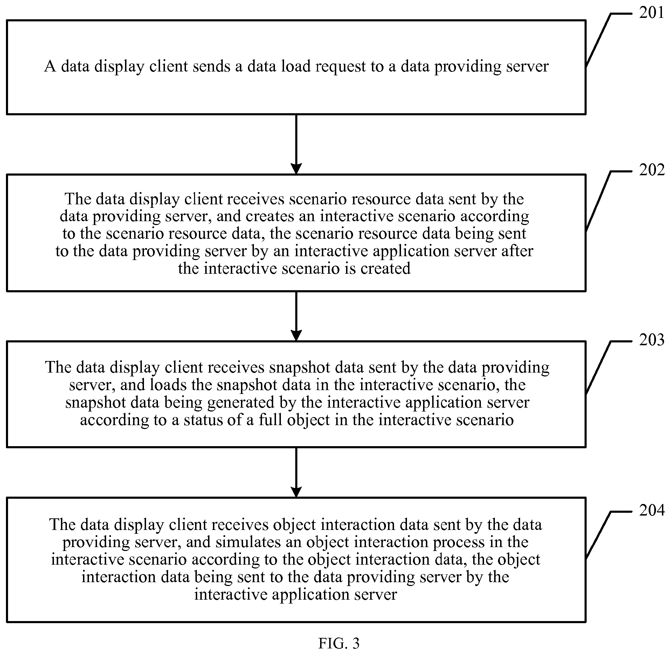

In the foregoing embodiments, the processing method for displaying data in a client provided in the embodiments of the present disclosure is described from the perspective of the data providing server. Subsequently, the descriptions are provided from the perspective of the data display client. Referring to FIG.3, a processing method for displaying data in a client according to an embodiment of the present disclosure may include the following steps 201 to 204.

In step 201, a data display client sends a data load request to a data providing server.

In the embodiment of the present disclosure, when the data display client is required to locally display an interactive scenario, the data display client may send the data load request to the data providing server. The data providing server receives the data load request sent by the data display client, and the data providing server may determine, in response to the data load request, that a user needs to display the interactive scenario.

In step 202, the data display client receives scenario resource data sent by the data providing server, and creates an interactive scenario based on the scenario resource data. The scenario resource data is sent to the data providing server by an interactive application server after the interactive scenario is created.

In the embodiment of the present disclosure, after the data display client initiates the data load request, the data providing server obtains the scenario resource data from the interactive application server, and obtains snapshot data generated at different snapshot generating time instants. When the data display client sends the data load request, the data providing server may immediately send the scenario resource data to the data display client, so that the data display client immediately starts to create the interactive scenario based on the scenario resource data, to shorten a time period during which the user waits for data to be loaded.

In step 203, the data display client receives snapshot data sent by the data providing server, and loads the snapshot data in the interactive scenario. The snapshot data is generated by the interactive application server according to a status of a full object in the interactive scenario.

In the embodiment of the present disclosure, the data providing server further sends the snapshot data to the data display client, so that the data display client loads the snapshot data in the interactive scenario, and restores the status of the full object in the interactive scenario.

In some embodiments of the present disclosure, if the data providing server receives, at a first time instant, the data load request sent by the data display client, the process of receiving snapshot data sent by the data providing server by the data display client in step 203 includes steps E1 and E2.

In step E1, if the first time instant is a snapshot sending time instant, the data display client receives, from the data providing server, the snapshot data sent by the interactive application server at the first time instant.

In step E2, if the first time instant is not the snapshot sending time instant, the data display client receives, from the data providing server, snapshot data sent by the interactive application server at a latest snapshot sending time instant after the first time instant.

The interactive application server sends the snapshot data regularly according to the snapshot period, and a time instant when the interactive application server sends snapshot data is defined as a snapshot sending time instant. Multiple snapshot sending time instants may exist according to the preset snapshot period. If the first time instant is the snapshot sending time instant, the data providing server receives the snapshot data sent by the interactive application server at the first time instant. The data providing server may send, to the data display client, the snapshot data sent by the interactive application server at the first time instant, so that the data display client loads the snapshot data in the interactive scenario as soon as possible, and restores the status of the full object in the interactive scenario. If the first time instant is not the snapshot sending time instant, it is indicated that the interactive application server does not send latest snapshot data at the first time instant, and the data providing server waits from the first time instant, until the snapshot data sent by the interactive application server at the latest snapshot sending time instant after the first time instant is received. If the data providing server receives the latest snapshot data, the data providing server sends, to the data display client, the snapshot data sent by the interactive application server at the latest snapshot sending time instant after the first time instant.

In some embodiments of the present disclosure, the process of sending a data load request to a data providing server by a data display client in step 202 includes step F1.

In step F1, the data display client sends a data load request including a playback time instant to the data providing server.

The user needs to play back an interaction process of a simulation object in the interactive scenario at a certain time instant, the data display client sends the data load request including the playback time instant to the data providing server, and the data providing server receives, at a second time instant, the data load request including the playback time instant that is sent by the data display client.

In some embodiments of the present disclosure, if the data providing server receives the data load request including the playback time instant at the second time instant, the process of receiving snapshot data sent by the data providing server by the data display client in step 203 includes steps G1 and G2.

In step G1, if the playback time instant is a snapshot sending time instant, the data display client receives, from the data providing server, the snapshot data sent by the interactive application server at the playback time instant.

In step G2, if the playback time instant is not the snapshot sending time instant, the data display client receives, from the data providing server, snapshot data sent by the interactive application server at a snapshot sending time instant closest to the playback time instant.

The interactive application server sends the snapshot data regularly according to the snapshot period, and a time instant when the interactive application server sends snapshot data is defined as a snapshot sending time instant. Multiple snapshot sending time instants may exist according to the preset snapshot period. If the playback time instant is the snapshot sending time instant, the data providing server buffers the snapshot data sent by the interactive application server at the playback time instant. The data providing server may send, to the data display client, the snapshot data sent by the interactive application server at the playback time instant, so that the data display client loads the snapshot data in the interactive scenario as soon as possible, and restores the status of the full object in the interactive scenario. If the playback time instant is not the snapshot sending time instant, it is indicated that the interactive application server does not send the snapshot data at the playback time instant, and the data providing server backtracks from the playback time instant to find the closest snapshot sending time instant, and obtains the snapshot data sent by the interactive application server at the snapshot sending time instant closest to the playback time instant. The data providing server sends, to the data display client, the snapshot data sent by the interactive application server at the snapshot sending time instant closest to the playback time instant.

In step 204, the data display client receives object interaction data sent by the data providing server, and simulates an object interaction process in the interactive scenario based on the object interaction data. The object interaction data is sent to the data providing server by the interactive application server.

In the embodiment of the present disclosure, the data providing server buffers the object interaction data generated by the interactive application server, and the data providing server may further send the object interaction data to the data display client, so that the data display client simulates an object interaction process in the interactive scenario based on the object interaction data, and the data display client displays the simulated object interaction process in the interactive scenario. The user can watch the simulated object interaction process. In the embodiment of the present disclosure, the interactive application server classifies the data in the interactive scenario into three different types of data, and all types of data is sequentially loaded. Therefore, the data display client can rapidly restore the interactive scenario and restore interactions of simulation objects, so that the user can smoothly view interaction processes of the simulation objects in the interactive scenario, thereby resolving the problem in the conventional technology that the client is required to wait for a long time.

In some embodiments of the present disclosure, in the foregoing implementation scenarios in which step G1 and step G2 are performed, the process of receiving object interaction data sent by the data providing server by the data display client in step 204 includes steps H1 and H2.

In step H1, if the playback time instant is the snapshot sending time instant, the data display client receives, from the data providing server, the object interaction data to be sent by the interactive application server from the playback time instant.

In step H2, if the playback time instant is not the snapshot sending time instant, the data display client receives, from the data providing server, the object interaction data to be sent by the interactive application server from the snapshot sending time instant closest to the playback time instant.

The interactive application server generates the object interaction data based on the object interaction behavior in the interactive scenario. The object interaction data is real-time network uplink and downlink data, and is generated after the interactive application server performs uplink and downlink interactions with the interactive application client. When the data display client initiates data playback and if the playback time instant is the snapshot sending time instant, the data providing server sends, to the data display client, the object interaction data to be sent by the interactive application server from the playback time instant; and if the playback time instant is not the snapshot sending time instant, the data providing server sends, to the data display client, the object interaction data to be sent by the interactive application server from the snapshot sending time instant closest to the playback time instant, so that the data display client can receive multiple pieces of object interaction data from the data providing server, and the data display client can simulate the object interaction process in the interactive scenario.

As can be known from the above schematic embodiments of the present disclosure, in the embodiment of the present disclosure, a server synchronizes with a client, an interactive application server sends scenario resource data and periodically generated snapshot data to a data providing server, and the data providing server sequentially sends the scenario resource data, the snapshot data, and object interaction data to a data display client, to ensure that a user can operate the data display client at any time instant to initiate data display. The data display client may create an interactive scenario based on the scenario resource data after receiving the scenario resource data, may load the snapshot data in the interactive scenario after receiving the snapshot data, and may simulate an object interaction process in the interactive scenario based on the object interaction data after receiving the object interaction data. In the embodiment of the present disclosure, the interactive application server classifies the data in the interactive scenario into three different types of data, and all types of data is sequentially loaded. Therefore, the data display client can rapidly restore interactions of simulation objects in the interactive scenario, so that the user can smoothly view interaction processes of the simulation objects in the interactive scenario, thereby resolving the problem in the conventional technology that the client is required to wait for a long time.

For better understanding and implementing the foregoing solutions of the embodiments of the present disclosure, detailed descriptions are provided by using a corresponding application scenario as an example hereinafter.

Next, an example in which the interactive scenario is a game scenario is used. The data display client may be a battle watching client (briefly referred to as a client in an example hereinafter), the data providing server may be a battle watching server, and the interactive application server may be a game server. The game server classifies all data in the game scenario into three types: scenario resource data, snapshot data, and object interaction data. The game server and the battle watching server remain data synchronization. The battle watching server receives the scenario resource data, the snapshot data, and the object interaction data from the game server. The battle watching server sequentially sends the scenario resource data, the snapshot data, and the object interaction data to the battle watching client, so that the battle watching client can rapidly enter a battle watching state locally, and display game data to users.

In the conventional technology, regardless of the battle watching or the playback, a relatively long time is required to be waited to restore a battle scenario at a specific time instant. In the embodiment of the present disclosure, a client server (CS) is used for synchronization, and the battle server has all data of a battlefield. The snapshot data is regularly generated based on the battlefield data of the battle server and the snapshot data is sent to the battle watching server. The battle watching server uses snapshot delay forwarding and snapshot minimum backtracking technologies, to ensure that a player can watch and play back battles at any time. The client can obtain the snapshot data in a shortest time to restore the battlefield, thereby smoothly watching battles. The snapshot delay forwarding is used to normally watch battles. The battle watching client is required to restore the battlefield when being connected to the battle watching server for the first time. The battle watching server forwards available scenario resource data and snapshot data to the client after the available scenario resource data and snapshot data is received. The snapshot minimum backtracking is used to play back battles. When the battle watching client selects playback at a certain time instant, the battle watching server backtracks to a latest available battlefield before the certain time instant to restore the snapshot and forwards the snapshot to the client, thereby avoiding restoring the battlefield from the beginning for each playback.

In the embodiment of the present disclosure, the user can enter the battle watching state at any time by using the battle watching client, and any playback request can be rapidly responded, thereby significantly reducing the time for restoring the battlefield, improving a response speed, and resolving the problems in the conventional technology. In the embodiments of the present disclosure, the snapshot data can be regularly generated based on the status of the full object in the battlefield scenario. For example, the snapshot data may include positions and battle attributes of objects such as fighting roles, defense towers, soldiers, and wild monsters, and equipment, money, and battle statistical data of all fighting roles. A battle watching function can be provided in all mobile games synchronized over a CS network. In a frame synchronization mobile game according to the conventional technology, the server does not have the status of the full object in the battlefield, and cannot generate the snapshot data. Therefore, each time the battlefield scenario is to be restored, the client pulls, to the server, battle data stored from the beginning of the battle, and can only simulate the battle from the beginning. Response time is long in the battlefield restoring phase.

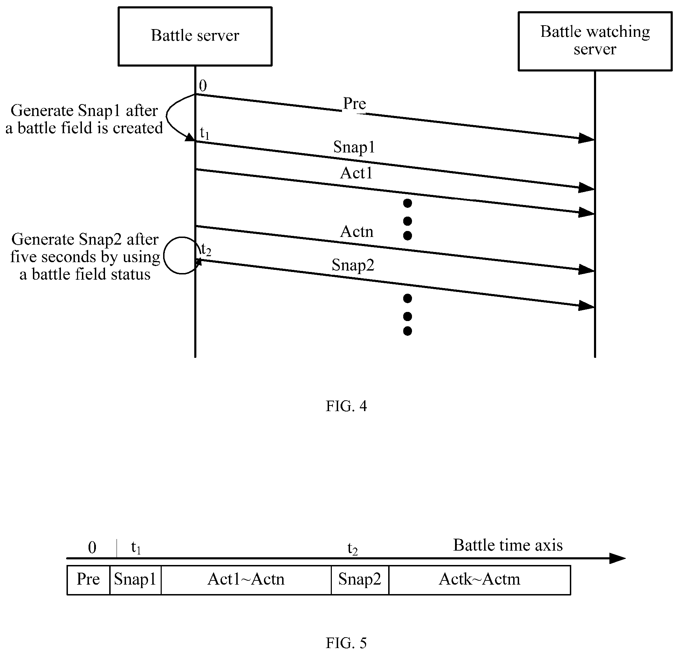

Referring to FIG.4, FIG.5, FIG.6, FIG.7, and FIG.8, in the embodiments of the present disclosure, a snapshot basis data required for watching battles may be regularly generated by using the snapshot, battle watching may be implemented by using snapshot delay forwarding to rapidly restore the battlefield, and playback may be implemented by using snapshot minimum backtracking to rapidly restore the battlefield. Next, the processes of the embodiments of the present disclosure are described by examples.

The battle server processes interaction logics of a fighting client and processes all data in the battlefield. The processing logics of the battle server are relatively complex, and the number of fighting persons that a single battle server can bear is not excessively large. In the embodiments of the present disclosure, the battle watching server is independently arranged in addition to the battle server, interactions between the battle watching server and the battle watching client may be relatively simple, and the number of battle watching persons that a single battle watching server can bear may be large. In the embodiments of the present disclosure, the battle watching function in the battlefield scenario is not implemented by the battle server, because the battle watching function may reduce a bearing capacity of the single battle server, and also limits the number of battle watching players that can be simultaneously supported in one battle. In the embodiments of the present disclosure, the battle watching server is deployed independently, the watching of the battle scenario does not affect loads and a deployment structure of the battlefield, and the battle watching server may be extended in parallel. In the embodiments of the present disclosure, one battle may be mapped to different battle watching servers for players to watch, thereby supporting massive players to watch the battle. Next, how the battle watching server processes the scenario resource data, the snapshot data, and the object interaction data in the battle watching scenario is described in the embodiments of the present disclosure subsequently.

First, the process for generating the scenario resource data and the snapshot data is described. As shown in FIG.4 and FIG.5, data buffered by the battle watching server from the battle server includes: scenario resource data Pre, snapshot data Snap1 and Snap2, object interaction data Act1-Actn generated after Snap1 is generated, and object interaction data Actk-Actm generated after Snap2 is generated. In the foregoing battlefield data type, Pre represents pre-loaded data, and Pre is scenario resource data that is required to be delivered in any case during battle watching. Pre is only required to be loaded once for one battle watching process, for the client to load battlefield resources, such as map resources, hero model resources, and monster model resources. Snap represents status data of the full object in the battlefield at a certain time instant, and is used for the client to restore the battlefield state. A Snap packet is regularly generated by the battle server. Because the status of the full object in the battlefield changes all the time, Snaps generated at different time instants are different. Act represents all uplink and downlink network interaction data within one frame of the battle server, and is used for the client to simulate the battle process after the battlefield status is restored. The battle server forwards Act to the battle watching server in real time. Snap differs from Act in that: Snap is full data and is a basis for restoring the battlefield status, and Act may be considered as incremental data and is a basis for simulating a battle behavior after the battlefield status is restored.

As shown in FIG.4, the battle server sends a Pre packet to the battle watching server when the battle starts, generates a first Snap packet after the battlefield is created, and then generates one Snap packet every 5 seconds based on the status of the full object in the battlefield. Act packets are successively forwarded at an interval between two Snaps. The battle watching server receives the data packet sent by the battle server and then buffers the data packet according to a timestamp.

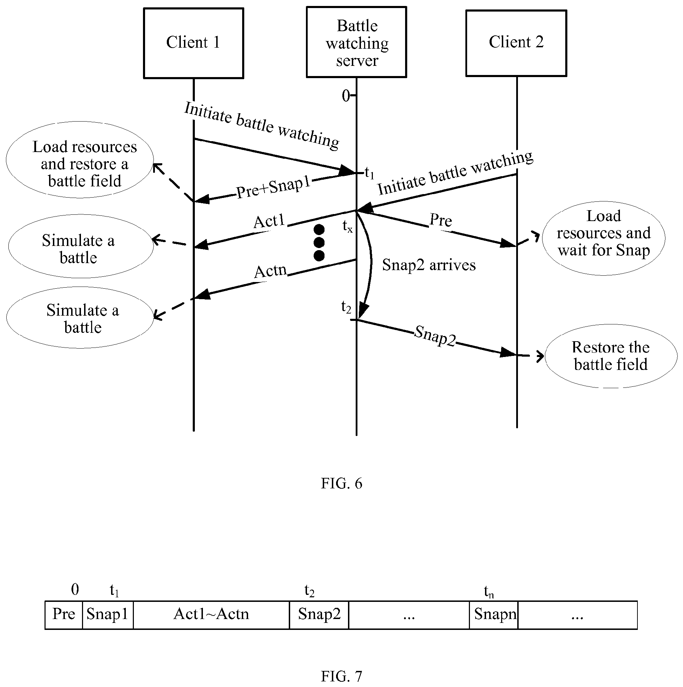

Next, the process for two clients to separately request battle watching to the battle watching server is described. The battle watching server receives the Snap packet from the battle server and forwards the Snap packet. As shown in FIG.6 and FIG.7, data buffered by the battle watching server from the battle server includes: scenario resource data Pre, snapshot data Snap1, Snap2, ..., and Snapn, and object interaction data generated after each Snap is generated, for example, object interaction data Act1 to Actn generated after Snap1 is generated. The client rapidly restores the battlefield by using the Snap packet, and separately simulates two situations: there is a Snap packet and there is no Snap packet when the battle watching is initiated. In a battle watching scenario based on a normal timing sequence, when receiving a battle watching request from the client, the battle watching server immediately returns Pre, and marks the client as a Snap waiting status. The client starts to load the battlefield resources after receiving the Pre packet.

Situation 1: when the battle is watched at a time instant t₁, the battle watching server just receives Snap1 generated by the battle server, and directly sends Snap1 to the client. Subsequently, the client is not necessary to restore the battlefield status, and thus sends only Act and sends no Snap. The client is only required to parse the Snap packet to restore a status of the object in the battlefield, after the resource is loaded. Because a time for creating the battlefield by the client after the resources are prepared may be omitted, a response time for simulating the battlefield restoring in this situation includes only a time t=△t required by parsing the Pre packet and loading the battlefield resources, where △t represents a time required by the client to load resources.

Situation 2: when the battle is watched at a time instant tₓ, the battle watching server does not receive Snap generated by the battle server, and instructs the client to maintain a waiting status. During the waiting, the client remains on a pre-load interface. When Snap2 arrives, the battle watching server forwards Snap2 to the client. In this situation, the client can obtain an available Snap packet after waiting for at most 5 seconds. A response time for restoring the battlefield depends on which process is more time-consuming between a process of waiting for Snap and a process of parsing the Pre packet to load battlefield resources, and may be represented as t=Max(△t,5).

In the frame synchronization solution of the conventional technology, a response time for restoring the battlefield at the time instant tₓ is in direct proportion to tₓ. Compared with the conventional technology, in the embodiments of the present disclosure, when the battle is watched at different time instants, the response time for restoring the battlefield only changes slightly, and is shorter than a response time in the existing frame synchronization solution.

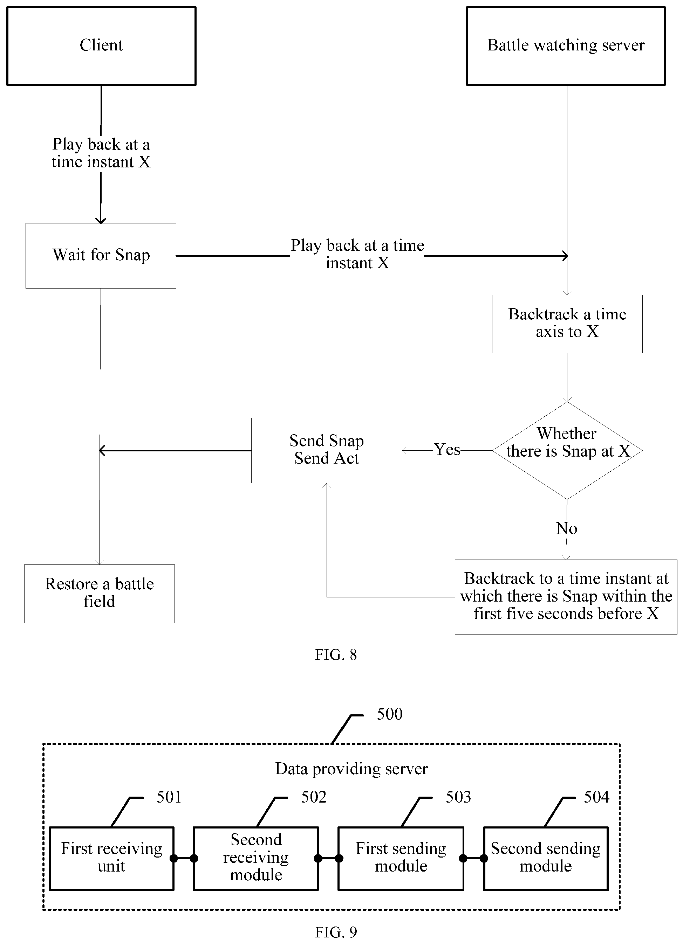

Next, the scenario in which the client initiates a playback request in the embodiments of the present disclosure is described. Referring to FIG.8, in the embodiment of the present disclosure, a waiting time for the user to play back the battle is reduced by using a Snap packet minimum backtracking manner. The rapid playback of the Snap packet is implemented as follows. The battle watching client is required to request playing back the battle at a time instant x, and the battle watching server first backtracks to the time instant x to check buffer data. If there is the Snap packet, the Snap packet is directly returned to the client, and Act packets immediately close to the Snap packet are sequentially pushed. If there is no Snap packet at the time instant x, as can be known according to the foregoing snapshot data caching mechanism, Snap definitely exists within the 5 seconds before the time instant x. This means that the battle watching server can find the Snap packet by backtracking at most 5 seconds, then shifts a time axis back to the time instant, and returns Snap and Act to the client. Similar to the battle watching, in a playback operation, once the battlefield status is restored, no Snap is required to be sent to the client.

In the embodiment of the present disclosure, during the playback, the battle watching client is not necessary to re-load resources, so that once the Snap packet is received, the battlefield can be restored immediately, and the response time is almost 0. For the situation in which there is no Snap packet at the time instant x, the client is only required to simulate battle for several seconds to restore the battlefield at the time instant x. Assuming that the simulation is also performed at n times speed, a maximum response time is t≈5/n. Compared with a linear response time in the existing frame synchronization playback solution, obviously, less time is used in the embodiment of the present disclosure.

In the solution of the conventional technology, a playback response time is also in direct proportion to a playback time instant. An extreme situation is assumed: a player may be particularly interested in a specific battle process, and watch the battle repeatedly within a period of time. As can be known based on the foregoing descriptions, more playback times require more extra time for waiting for restoring the battlefield. In this case, the playback function is almost unavailable, and this is a main reason why many games supporting battle watching in sequence do not provide the playback function.

In the embodiment of the present disclosure, by forwarding and backtracking of the snapshot data of the battlefield, the response time for battle watching in the MOBA game is reduced to a stable short time period as compared with a linear increase in the frame synchronization solution, thereby fundamentally resolving the problem of being not sufficiently flexible and smooth because it is required to wait for a long time to restore the battlefield when the battle is watched and played back.

In the embodiment of the present disclosure, the players endure certain traffic consumption during battle watching. Therefore, no battle watching data is required to be buffered in the battle watching client on design of battle watching and playback, and a performance requirement of the client is reduced, so that as many clients as possible can use the solution according to the embodiment of the present disclosure. Practically, based on the design principle of the present disclosure, a design solution in which the battle watching client is used to locally buffer the snapshot data received from the battle watching server, so that during playback, interactions between the battle watching client and the battle watching server can be reduced to some extent, falls within the scope of the snapshot backtracking solution according to the embodiments of the present disclosure.

It should be noted that, for ease of description, the foregoing method embodiments are described as combination of a series of actions. However, a person skilled in the art should understand that the present disclosure is not limited to the described sequence of the actions, because some steps may be performed in another sequence or simultaneously according to the present disclosure. In addition, a person skilled in the art should also know that all the embodiments described in this specification are preferred embodiments, and the related actions and modules are not necessary for the present disclosure.

To better implement the foregoing solutions in the embodiments of the present disclosure, related apparatuses configured to implement the foregoing solutions are further described hereinafter.

Referring to FIG. 9, a data providing server 500 according to an embodiment of the present disclosure may include: a first receiving module 501, a second receiving module 502, a first sending module 503, and a second sending module 504.

The first receiving module 501 is configured to: receive scenario resource data sent by an interactive application server after an interactive scenario is created, and receive snapshot data sent by the interactive application server according to a preset snapshot period. The snapshot data is generated by the interactive application server according to a status of a full object in the interactive scenario.

The second receiving module 502 is configured to receive a data load request sent by a data display client.

The first sending module 503 is configured to: send the scenario resource data to the data display client in response to the data load request, and send the snapshot data to the data display client.

The second sending module 504 is configured to send, if the data providing server buffers object interaction data generated by the interactive application server, the object interaction data to the data display client.

In some embodiments of the present disclosure, if the data providing server receives, at a first time instant, the data load request sent by the data display client, the first sending module 503 is configured to send the scenario resource data to the data display client in real time after the data load request is received at the first time instant.

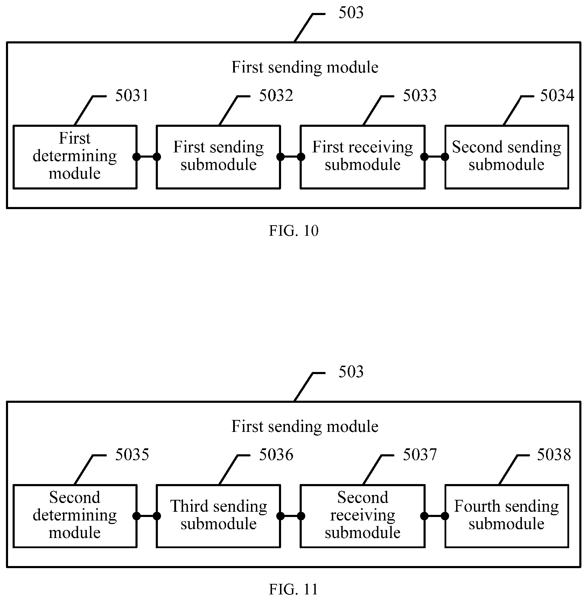

In some embodiments of the present disclosure, referring to FIG. 10, the first sending module 503 includes: a first determining module 5031, a first sending submodule 5032, a first receiving submodule 5033 and a second sending submodule 5034.

The first determining module 5031 is configured to determine whether the first time instant is a snapshot sending time instant when the interactive application server sends snapshot data.

The first sending submodule 5032 is configured to send, if the first time instant is the snapshot sending time instant, to the data display client, the snapshot data sent by the interactive application server at the first time instant.

The first receiving submodule 5033 is configured to wait from the first time instant if the first time instant is not the snapshot sending time instant, until snapshot data sent by the interactive application server at a latest snapshot sending time instant after the first time instant is received.

The second sending submodule 5034 is configured to send, to the data display client, the snapshot data sent by the interactive application server at the latest snapshot sending time instant after the first time instant.

In some embodiments of the present disclosure, if the data providing server receives, at a second time instant, a data load request including a playback time instant that is sent by the data display client, the playback time instant being earlier than the second time instant, the first sending module 503 includes: a second determining module 5035, a third sending submodue 5036, a second receiving submodule 5037 and a fourth sending submodule 5038, as shown in FIG. 11.

The second determining module 5035 is configured to determine whether the playback time instant is a snapshot sending time instant when the interactive application server sends snapshot data.

The third sending submodule 5036 is configured to send, if the playback time instant is the snapshot sending time instant, to the data display client, the snapshot data sent by the interactive application server at the playback time instant.

The second receiving submodule 5037 is configured to backtrack, if the playback time instant is not the snapshot sending time instant, in a time axis from the playback time instant to find a snapshot sending time instant closest to the playback time instant, and obtain snapshot data sent by the interactive application server at the snapshot sending time instant closest to the playback time instant.

The fourth sending submodule 5038 is configured to send, to the data display client, the snapshot data sent by the interactive application server at the snapshot sending time instant closest to the playback time instant.

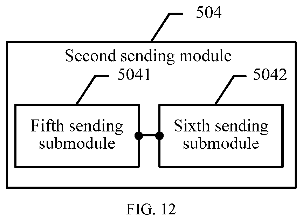

In some embodiments of the present disclosure, referring to FIG.12, the second sending module 504 includes: a fifth sending submodule 5041 and a sixth sending submodule 5042.

The fifth sending submodule 5041 is configured to send, if the playback time instant is the snapshot sending time instant, to the data display client, object interaction data to be sent by the interactive application server from the playback time instant.

The sixth sending submodule 5042 is configured to send, if the playback time instant is not the snapshot sending time instant, to the data display client, object interaction data to be sent by the interactive application server from the snapshot sending time instant closest to the playback time instant.

As can be known from the above schematic embodiments of the present disclosure, in the embodiment of the present disclosure, a server synchronizes with a client, an interactive application server sends scenario resource data and periodically generated snapshot data to a data providing server, and the data providing server sequentially sends the scenario resource data, the snapshot data, and object interaction data to a data display client, to ensure that a user can operate the data display client at any time instant to initiate data display. The data display client may create an interactive scenario based on the scenario resource data after receiving the scenario resource data, may load the snapshot data in the interactive scenario after receiving the snapshot data, and may simulate an object interaction process in the interactive scenario based on the object interaction data after receiving the object interaction data. In the embodiment of the present disclosure, the interactive application server classifies the data in the interactive scenario into three different types of data, and all types of data is sequentially loaded. Therefore, the data display client can rapidly restore interactions of simulation objects in the interactive scenario, so that the user can smoothly view interaction processes of the simulation objects in the interactive scenario, thereby resolving the problem in the conventional technology that the client is required to wait for a long time.

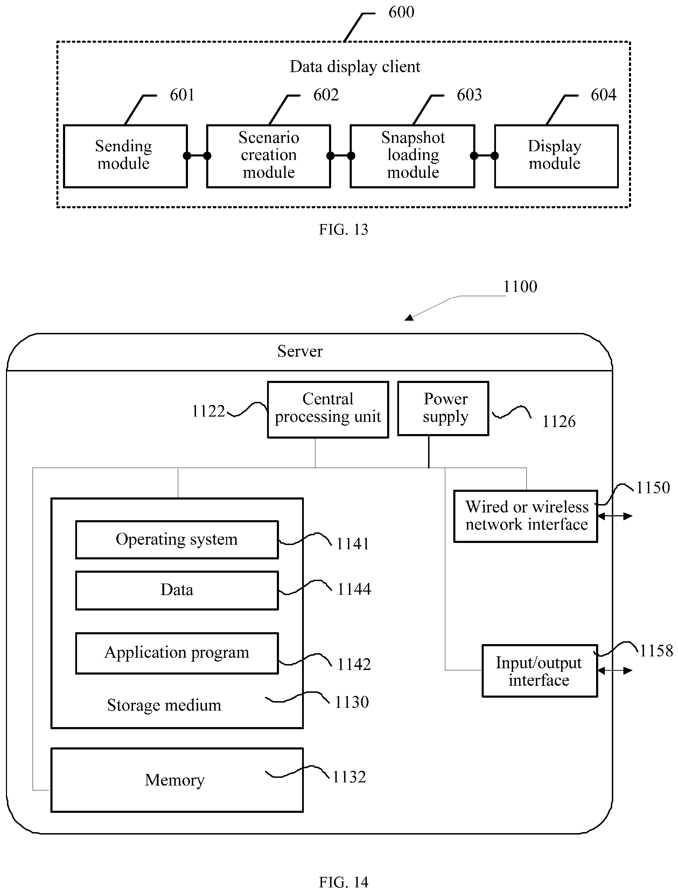

Referring to FIG. 13, a data display client 600 according to an embodiment of the present disclosure may include: a sending module 601, a scenario creation module 602, a snapshot loading module 603, and a display module 604.

The sending module 601 is configured to send a data load request to a data providing server.

The scenario creation module 602 is configured to: receive scenario resource data sent by the data providing server, and create an interactive scenario based on the scenario resource data. The scenario resource data is sent to the data providing server by an interactive application server after the interactive scenario is created.

The snapshot loading module 603 is configured to: receive snapshot data sent by the data providing server, and load the snapshot data in the interactive scenario. The snapshot data is generated by the interactive application server based on a status of a full object in the interactive scenario.

The display module 604 is configured to: receive object interaction data sent by the data providing server, and simulate an object interaction process in the interactive scenario based on the object interaction data. The object interaction data is sent to the data providing server by the interactive application server.

In some embodiments of the present disclosure, if the data providing server receives, at a first time instant, the data load request sent by the data display client, the snapshot loading module 603 is configured to: receive, from the data providing server if the first time instant is a snapshot sending time instant, snapshot data sent by the interactive application server at the first time instant; and receive, from the data providing server if the first time instant is not the snapshot sending time instant, snapshot data sent by the interactive application server at a latest snapshot sending time instant after the first time instant.

In some embodiments of the present disclosure, the sending module 601 is configured to send a data load request including a playback time instant to the data providing server.

If the data providing server receives the data load request including the playback time instant at a second time instant, the snapshot loading module 603 is configured to: receive, from the data providing server if the playback time instant is the snapshot sending time instant, the snapshot data sent by the interactive application server at the playback time instant; and receive, from the data providing server if the playback time instant is not the snapshot sending time instant, snapshot data sent by the interactive application server at a snapshot sending time instant closest to the playback time instant.

In some embodiments of the present disclosure, the display module 604 is configured to: receive, from the data providing server if the playback time instant is the snapshot sending time instant, object interaction data to be sent by the interactive application server from the playback time instant; and receive, from the data providing server if the playback time instant is not the snapshot sending time instant, object interaction data to be sent by the interactive application server from the snapshot sending time instant closest to the playback time instant.

As can be known from the above schematic embodiments of the present disclosure, in the embodiment of the present disclosure, a server synchronizes with a client, an interactive application server sends scenario resource data and periodically generated snapshot data to a data providing server, and the data providing server sequentially sends the scenario resource data, the snapshot data, and object interaction data to a data display client, to ensure that a user can operate the data display client at any time instant to initiate data display. The data display client may create an interactive scenario based on the scenario resource data after receiving the scenario resource data, may load the snapshot data in the interactive scenario after receiving the snapshot data, and may simulate an object interaction process in the interactive scenario based on the object interaction data after receiving the object interaction data. In the embodiment of the present disclosure, the interactive application server classifies the data in the interactive scenario into three different types of data, and all types of data is sequentially loaded. Therefore, the data display client can rapidly restore interactions of simulation objects in the interactive scenario, so that the user can smoothly view interaction processes of the simulation objects in the interactive scenario, thereby resolving the problem in the conventional technology that the client is required to wait for a long time.

FIG.14 is a schematic structural diagram of a server according to an embodiment of the present disclosure. A server 1100 may be the data providing server in the foregoing embodiment. The server 1100 may have different structures due to different configurations or performances, and may include one or more central processing units (CPU) 1122 (for example, one or more processors) and a memory 1132, one or more storage media 1130 (for example, one or more mass storage devices) for storing application programs 1142 or data 1144. The memory 1132 and the storage medium 1130 may be transient or persistent storages. A program stored in the storage medium 1130 may include one or more modules (not shown), and each module may include a series of instructions and operations for the server. Still further, the CPU 1122 may be configured to communicate with the storage medium 1130, and perform, in the server 1100, a series of instructions and operations stored in the storage medium 1130.

The server 1100 may further include one or more power supplies 1126, one or more wired or wireless network interfaces 1150, one or more input/output interfaces 1158, and/or one or more operating systems 1141, for example, Windows ServerTM, Mac OS XTM, UnixTM, LinuxTM, or FreeBSDTM.

The steps performed by the data providing server in the foregoing method embodiments may be performed based on the server structure shown in FIG. 14.

The CPU 1122 is further configured to cause the server to perform the method actually performed by the data providing server in the foregoing method embodiments.

A computer readable storage medium is further provided according to an embodiment of the present disclosure. The computer readable storage medium stores instructions, and the instructions, when being run on the computer, cause the computer to perform the method performed by the data providing server in the foregoing method embodiments.

A computer program product including instructions is further provided according to the present disclosure. The computer program product, when being run on a computer, causes the computer to perform the method performed by the data providing server in the foregoing method embodiments.

A computer program product including instructions is further provided according to the present disclosure. The computer program product, when being run on a computer, causes the computer to perform the method actually performed by the data providing server in the foregoing method embodiments.

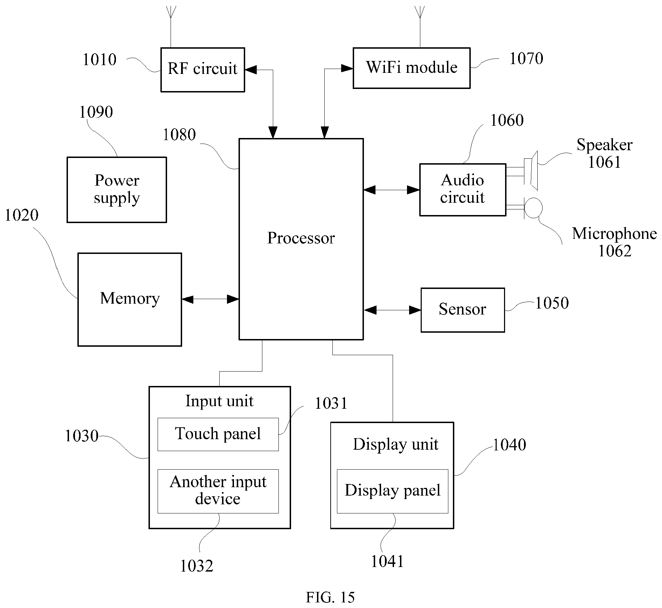

A terminal is further provided according to an embodiment of the present disclosure. The terminal includes the data display client in the foregoing embodiment. As shown in FIG.15, for ease of description, FIG.15 only shows a part related to the embodiment of the present disclosure. For specific technical details not disclosed, one may refer to the description in the method embodiments of the present disclosure. The terminal may be any terminal device such as a mobile phone, a tablet computer, a personal digital assistant (PDA), a point of sales (POS), and a vehicle-mounted computer. It is assumed that the terminal is a mobile phone.

FIG.15 is a block diagram of a part of structures of a terminal (a mobile phone) according to an embodiment of the present disclosure. Referring to FIG.15, the mobile phone includes components such as a radio frequency (RF) circuit 1010, a memory 1020, an input unit 1030, a display unit 1040, a sensor 1050, an audio circuit 1060, a wireless fidelity (WiFi) module 1070, a processor 1080, and a power supply 1090. A person skilled in the art may understand that the structure of the mobile phone shown in FIG.15 does not limit the mobile phone, and the mobile phone may include more components or fewer components than those shown in the figure, some components may be combined, or the components may be deployed in a different manner.

The components of the mobile phone are described in detail with reference to FIG.15 hereinafter.

The RF circuit 1010 may be configured to receive and send a signal during an information transceiving process or a call process. Specifically, the RF circuit receives downlink information from a base station, and then sends the downlink information to the processor 1080 for processing. In addition, the RF circuit 1010 sends related uplink data to the base station. Generally, the RF circuit 1010 includes, but is not limited to, an antenna, at least one amplifier, a transceiver, a coupler, a low noise amplifier (LNA), and a duplexer. In addition, the RF circuit 1010 may communicate with a network and another device by wireless communication. In the wireless communication, any communication standard or protocol may be used, including but not limited to, Global System for Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like.

The memory 1020 may be configured to store a software program and module. The processor 1080 runs the software program and module stored in the memory 1020, to implement various functional applications and data processing of the mobile phone. The memory 1020 may mainly include a program storage area and a data storage area. The program storage area may store an operating system, an application program required by at least one function (such as a sound playing function and an image playing function), and the like. The data storage area may store data (such as audio data and a telephone book) created according to use of the mobile phone, and the like. In addition, the memory 1020 may include a high speed random access memory, and may further include a non-volatile memory, such as at least one magnetic disk storage device and a flash memory, or other volatile solid-state storage devices.

The input unit 1030 may be configured to receive inputted digital or character information, and generate a key signal input related to user setting and function control of the mobile phone. Specifically, the input unit 1030 may include a touch panel 1031 and another input device 1032. The touch panel 1031, which is also referred to as a touchscreen, may collect a touch operation of a user on or near the touch panel (such as an operation of a user on or near the touch panel 1031 by using any suitable object or accessory such as a finger or a stylus), and drive a corresponding connection apparatus according to a preset program. Optionally, the touch panel 1031 may include two parts: a touch detection apparatus and a touch controller. The touch detection apparatus detects a touch orientation of the user, detects a signal generated by the touch operation, and transfers the signal to the touch controller. The touch controller receives touch information from the touch detection apparatus, converts the touch information into contact coordinates, and sends the contact coordinates to the processor 1080. Moreover, the touch controller can receive and execute a command sent by the processor 1080. In addition, the touch panel 1031 may be a resistive, capacitive, infrared, or surface sound acoustic type touch panel. In addition to the touch panel 1031, the input unit 1030 may further include another input device 1032. Specifically, the another input device 1032 may include, but is not limited to, one or more of a physical keyboard, a functional key (such as a volume control key or a switch key), a track ball, a mouse, and a joystick.

The display unit 1040 may be configured to display information inputted by the user or information provided to the user, and various menus of the mobile phone. The display unit 1040 may include a display panel 1041. Optionally, the display panel 1041 may be a liquid crystal display (LCD), an organic light-emitting diode (OLED), or the like. Further, the touch panel 1031 may cover the display panel 1041. After detecting a touch operation on or near the touch panel 1031, the touch panel 1031 transfers the touch operation to the processor 1080, so as to determine a type of a touch event. Then, the processor 1080 provides corresponding visual output on the display panel 1041 based on the type of the touch event. Although the touch panel 1031 and the display panel 1041 function as two separate components to implement input and output functions of the mobile phone in FIG.15, the touch panel 1031 and the display panel 1041 may be integrated together to implement the input and output functions of the mobile phone in some embodiments.

The mobile phone may further include at least one sensor 1050 such as an optical sensor, a motion sensor, and other sensors. Specifically, the optical sensor may include an ambient light sensor and a proximity sensor. The ambient light sensor may adjust luminance of the display panel 1041 according to brightness of the ambient light. The proximity sensor may switch off the display panel 1041 and/or backlight when the mobile phone is moved to an ear. As one type of the motion sensor, an acceleration sensor may detect sizes of accelerations in various directions (generally in three axes), may detect magnitude and a direction of the gravity when being static, and may be applied to recognize an attitude of the mobile phone (for example, switching between a horizontal screen and a vertical screen, a related game, and magnetometer attitude calibration), and recognize a function related to vibration (such as a pedometer and a knock), and the like. Other sensors such as a gyroscope, a barometer, a hygrometer, a thermometer, and an infrared sensor, may be arranged in the mobile phone, and are not described in detail herein.

The audio circuit 1060, a speaker 1061, and a microphone 1062 may provide audio interfaces between the user and the mobile phone. The audio circuit 1060 may convert received audio data into an electric signal and transmit the electric signal to the speaker 1061. The speaker 1061 converts the electric signal into a sound signal for outputting. On the other hand, the microphone 1062 converts a collected sound signal into an electric signal. The audio circuit 1060 receives the electric signal and converts the electric signal into audio data, and outputs the audio data to the processor 1080 for processing. Then, the processor 1080 sends the audio data to, for example, another mobile phone via an RF circuit 1010, or outputs the audio data to the memory 1020 for further processing.

WiFi is a short distance wireless transmission technology. The mobile phone may help, via the WiFi module 1070, the user to receive and send e-mails, browse a web page, access streaming media, and so on. WiFi provides wireless broadband Internet access for the user. Although FIG.15 shows the WiFi module 1070, it should be understood that the WiFi module 1070 is not a necessary component of the mobile phone, and as required, the WiFi module 1070 may be omitted as long as the scope of the essence of the present disclosure is not changed.

The processor 1080 is a control center of the mobile phone, and is connected to various components of the mobile phone via various interfaces and lines. By running or executing the software program and/or module stored in the memory 1020, and invoking data stored in the memory 1020, the processor 1080 performs various functions and data processing of the mobile phone, thereby performing overall monitoring on the mobile phone. Optionally, the processor 1080 may include one or more processing units. Preferably, the processor 1080 may be integrated with an application processor and a modem processor. The application processor mainly processes an operating system, a user interface, an application program, and the like. The modem processor mainly processes wireless communication. It should be understood that the foregoing modem processor may not be integrated into the processor 1080.

The mobile phone further includes the power supply 1090 (such as a battery) for supplying power to the components. Preferably, the power supply may be logically connected to the processor 1080 via a power supply management system, thereby implementing functions such as charging, discharging and power consumption management by using the power supply management system.

Although not shown, the mobile phone may further include a camera, a Bluetooth module, and the like, which are not described in detail herein.

In the embodiment of the present disclosure, the processor 1080 included in the terminal further controls a method process performed by the data display client in the foregoing method embodiment.

A readable computer storage medium is further provided according to an embodiment of the present disclosure. The computer readable storage medium stores instructions, and the instructions, when being run on a computer, cause the computer to perform the method actually performed by the data display client in the foregoing method embodiment.

A computer program product including instructions is further provided according to the present disclosure. The computer program product, when being run on a computer, cause the computer to perform the method actually performed by the data display client in the foregoing method embodiment.

In addition, it should be noted that, the foregoing described apparatus embodiments are merely exemplary. The units described as separate components may or may not be physically separate, and the components displayed as units may or may not be physical units, that is, may be located in one position, or may be distributed on multiple network units. Some or all of the modules may be selected according to actual needs to achieve the objectives of the solutions of the embodiments. In addition, in the accompanying drawings of the apparatus embodiments provided by the present disclosure, connection relationships between modules indicate that the modules are communicatively connected with each other, which may be implemented as one or more communication buses or signal lines. A person of ordinary skill in the art can understand and implement the embodiments of the present disclosure without creative efforts.

Based on the foregoing descriptions of the embodiments, a person skilled in the art may clearly understand that the present disclosure may be implemented by software in conjunction with necessary universal hardware, or implemented by dedicated hardware, including a dedicated integrated circuit, a dedicated CPU, a dedicated memory, a dedicated component and the like. Generally, any functions that can be performed by a computer program can be easily implemented by corresponding hardware. Moreover, hardware used to achieve a same function may have various structures, for example, an analog circuit, a digital circuit, a dedicated circuit, or the like. However, for the present disclosure, software program implementation is preferable in most cases. Based on this, the essence part of the technical solutions of the present disclosure or the part that makes contributions to the conventional art can be embodied in the form of a software product. The computer software product is stored in a readable storage medium, for example, a floppy disk, a USB flash drive, a removable hard disk, a read-only memory (ROM), a random access memory (RAM), a magnetic disk, or an optical disc of the computer, and includes several instructions for instructing a computer device (for example, a personal computer, a server, or a network device) to perform the methods according to the embodiments of the present disclosure.

## Claims

1. A processing method for displaying data in a data display client (13), performed by a data providing server (12), the processing method comprising:
receiving (101), by the data providing server, scenario resource data sent by an interactive application server after an interactive scenario is created, wherein the scenario resource data is basic data necessary for creating the interactive scenario;
periodically receiving (101), by the data providing server, snapshot data sent by the interactive application server according to a preset snapshot period, wherein the snapshot data is object status data generated by the interactive application server for a status of all objects displayed in the interactive scenario;
receiving (102), by the data providing server, a data load request sent by the data display client;
sending (103), by the data providing server, the scenario resource data to the data display client in response to the data load request;
sending (103), by the data providing server, the snapshot data to the data display client; and
sending (104), by the data providing server, if the data providing server buffers object interaction data generated by the interactive application server, the object interaction data to the data display client, wherein the object interaction data is real-time network uplink and downlink data that is generated by the interactive application server based on an object interaction behavior in the interactive scenario,
wherein if the data providing server receives, at a first time instant, the data load request sent by the data display client, the sending, by the data providing server, the scenario resource data to the data display client in response to the data load request comprises:
sending, by the data providing server, the scenario resource data to the data display client in real time after receiving the data load request at the first time instant, wherein the sending, by the data providing server, the snapshot data to the data display client comprises:
determining, by the data providing server, whether the first time instant is a snapshot sending time instant when the interactive application server sends snapshot data;
sending, by the data providing server if the first time instant is the snapshot sending time instant, to the data display client, the snapshot data sent by the interactive application server at the first time instant;
waiting, by the data providing server, from the first time instant if the first time instant is not the snapshot sending time instant, until snapshot data sent by the interactive application server at a latest snapshot sending time instant after the first time instant is received; and
sending, by the data providing server, to the data display client, the snapshot data sent by the interactive application server at the latest snapshot sending time instant after the first time instant,
or alternatively following to the sending (104), by the data providing server, the object interaction data to the data display client, the following steps are performed:
wherein if the data providing server receives, at a second time instant, a data load request comprising a playback time instant that is sent by the data display client, the playback time instant being earlier than the second time instant, the sending, by the data providing server, the snapshot data to the data display client comprises:
determining, by the data providing server, whether the playback time instant is a snapshot sending time instant when the interactive application server sends snapshot data;
sending, by the data providing server if the playback time instant is the snapshot sending time instant, to the data display client, the snapshot data sent by the interactive application server at the playback time instant;
backtracking, by the data providing server if the playback time instant is not the snapshot sending time instant, in a time axis from the playback time instant to find a snapshot sending time instant closest to the playback time instant, obtaining snapshot data sent by the interactive application server at the snapshot sending time instant closest to the playback time instant, the closest snapshot sending time instant being earlier than the playback time instant; and
sending, by the data providing server, to the data display client, the snapshot data sent by the interactive application server at the snapshot sending time instant closest to the playback time instant.

2. The method according to claim 1, wherein the sending (104), by the data providing server, the object interaction data to the data display client comprises with the alternatively performed steps:
sending (D1), by the data providing server if the playback time instant is the snapshot sending time instant, to the data display client, object interaction data to be sent by the interactive application server from the playback time instant; and
sending (D2), by the data providing server if the playback time instant is not the snapshot sending time instant, to the data display client, object interaction data to be sent by the interactive application server from the snapshot sending time instant closest to the playback time instant.

3. A processing method for displaying data in a data display client (13), performed by the data display client, the method comprising:
sending (201), by the data display client, a data load request to a data providing server (12);
receiving (202), by the data display client, scenario resource data sent by the data providing server, and creating an interactive scenario based on the scenario resource data, wherein the scenario resource data is basic data necessary for creating the interactive scenario, and is sent to the data providing server by an interactive application server after the interactive scenario is created;
periodically receiving (203), by the data display client, snapshot data sent by the data providing server, and loading the snapshot data in the interactive scenario, wherein the snapshot data is sent to the data providing server by the interactive application server according to a preset snapshot period, and is object status data generated by the interactive application server for a status of all objects displayed in the interactive scenario; and
receiving (204), by the data display client, object interaction data sent by the data providing server, and simulating an object interaction process in the interactive scenario based on the object interaction data, wherein the object interaction data is sent to the data providing server by the interactive application server, and is real-time network uplink and downlink data that is generated by the interactive application server based on an object interaction behavior in the interactive scenario,
wherein if the data providing server receives, at a first time instant, the data load request sent by the data display client, the receiving, by the data display client, snapshot data sent by the data providing server comprises:
receiving, by the data display client if the first time instant is a snapshot sending time instant, from the data providing server, snapshot data sent by the interactive application server at the first time instant; and
receiving, by the data display client if the first time instant is not the snapshot sending time instant, from the data providing server, snapshot data sent by the interactive application server at a latest snapshot sending time instant after the first time instant,
or wherein alternatively following to the receiving (204), by the data display client, object interaction data sent by the data providing server, the following steps are performed:
sending, by the data display client, a data load request comprising a playback time instant to the data providing server,
wherein if the data providing server receives the data load request comprising the playback time instant at a second time instant, the receiving, by the data display client, snapshot data sent by the data providing server comprises:
receiving, by the data display client if the playback time instant is the snapshot sending time instant, from the data providing server, snapshot data sent by the interactive application server at the playback time instant; and
receiving, by the data display client if the playback time instant is not the snapshot sending time instant, from the data providing server, snapshot data sent by the interactive application server at a snapshot sending time instant closest to the playback time instant, where the closest snapshot sending time instant is earlier than the playback time instant.

4. The method according to claim 3, wherein the receiving (204), by the data display client, object interaction data sent by the data providing server comprises:
receiving (H1), by the data display client if the playback time instant is the snapshot sending time instant, from the data providing server, object interaction data to be sent by the interactive application server from the playback time instant; and
receiving (H2), by the data display client if the playback time instant is not the snapshot sending time instant, from the data providing server, object interaction data to be sent by the interactive application server from the snapshot sending time instant closest to the playback time instant.

5. A data providing server (12), comprising:
a memory, configured to store computer executable program codes;
a network interface; and
a processor, coupled to the memory and the network interface, wherein
the program codes comprise instructions, and when the processor executes the instructions, the instructions cause the data providing server to perform the method performed by the data providing server according to claim 1 or 2.

6. A data display client (13), comprising:
a memory, configured to store computer executable program codes;
a transceiver; and
a processor, coupled to the memory and the transceiver, wherein
the program codes comprise instructions, and when the processor executes the instructions, the instructions cause the terminal to perform the method performed by the data display client according to claim 3 or 4.

7. A computer storage medium storing computer software instructions, wherein the computer software instruction are executed to perform the method performed by the data providing server according to claim 1 or 2.

8. A computer storage medium storing computer software instructions, wherein the computer software instructions are executed to perform the method performed by the data display client according to claim 3 or 4.

## Patentansprüche

1. Verarbeitungsverfahren zur Anzeige von Daten in einem Datenanzeige-Client (13), ausgeführt von einem Datenbereitstellungs-Server (12), wobei das Verarbeitungsverfahren Folgendes umfasst:
Empfangen (101), durch den Datenbereitstellungs-Server, von Szenario-Ressourcendaten, die von einem interaktiven Anwendungsserver nach der Erstellung eines interaktiven Szenarios gesendet werden, wobei die Szenario-Ressourcendaten Grunddaten sind, die zur Erstellung des interaktiven Szenarios erforderlich sind;
periodisches Empfangen (101), durch den Datenbereitstellungs-Server, von Snapshot-Daten, die vom interaktiven Anwendungsserver gemäß einem voreingestellten Snapshot-Zeitraum gesendet werden, wobei die Snapshot-Daten Objektstatus-Daten sind, die vom interaktiven Anwendungsserver für einen Status aller im interaktiven Szenario angezeigten Objekte erzeugt werden;
Empfangen (102), durch den Datenbereitstellungs-Server, einer vom Datenanzeige-Client gesendeten Datenladen-Anforderung;
Senden (103), durch den Datenbereitstellungs-Server, der Szenario-Ressourcendaten an den Datenanzeige-Client als Antwort auf die Datenladen-Anforderung;
Senden (103), durch den Datenbereitstellungs-Server, der Snapshot-Daten an den Datenanzeige-Client; und
Senden (104), durch den Datenbereitstellungs-Server, wenn der Datenbereitstellungs-Server vom interaktiven Anwendungsserver erzeugte Objektinteraktionsdaten puffert, der Objektinteraktionsdaten an den Datenanzeige-Client, wobei die Objektinteraktionsdaten Echtzeit-Netzwerk-Uplink- und -Downlink-Daten sind, die vom interaktiven Anwendungsserver auf der Grundlage eines Objektinteraktionsverhaltens im interaktiven Szenario erzeugt werden,
wobei, wenn der Datenbereitstellungs-Server zu einem ersten Zeitpunkt die vom Datenanzeige-Client gesendete Datenladen-Anforderung empfängt, das Senden, durch den Datenbereitstellungs-Server, der Szenario-Ressourcendaten an den Datenanzeige-Client als Antwort auf die Datenladen-Anforderung Folgendes umfasst:
Senden, durch den Datenbereitstellungs-Server, der Szenario-Ressourcendaten in Echtzeit an den Datenanzeige-Client nach dem Empfang der Datenladen-Anforderung zum ersten Zeitpunkt, wobei das Senden, durch den Datenbereitstellungs-Server, der Snapshot-Daten an den Datenanzeige-Client Folgendes umfasst:
Bestimmen, durch den Datenbereitstellungs-Server, ob der erste Zeitpunkt ein Snapshot-Sendezeitpunkt ist, zu dem der interaktive Anwendungsserver Snapshot-Daten sendet;
Senden, durch den Datenbereitstellungs-Server, wenn der erste Zeitpunkt der Snapshot-Sendezeitpunkt ist, an den Datenanzeige-Client, der vom interaktiven Anwendungsserver zum ersten Zeitpunkt gesendeten Snapshot-Daten;
Warten, durch den Datenbereitstellungs-Server, ab dem ersten Zeitpunkt, wenn der erste Zeitpunkt nicht der Snapshot-Sendezeitpunkt ist, bis Snapshot-Daten empfangen werden, die vom interaktiven Anwendungsserver zu einem letzten Snapshot-Sendezeitpunkt nach dem ersten Zeitpunkt gesendet wurden; und
Senden, durch den Datenbereitstellungs-Server, an den Datenanzeige-Client, der vom interaktiven Anwendungsserver zum letzten Snapshot-Sendezeitpunkt nach dem ersten Zeitpunkt gesendeten Snapshot-Daten,
oder alternativ, im Anschluss an das Senden (104), durch den Datenbereitstellungs-Server, der Objektinteraktionsdaten an den Datenanzeige-Client, werden die folgenden Schritte ausgeführt:
wobei, wenn der Datenbereitstellungs-Server zu einem zweiten Zeitpunkt eine einen Wiedergabezeitpunkt umfassende Datenladen-Anforderung empfängt, die vom Datenanzeige-Client gesendet wird, wobei der Wiedergabezeitpunkt vor dem zweiten Zeitpunkt liegt, das Senden, durch den Datenbereitstellungs-Server, der Snapshot-Daten an den Datenanzeige-Client Folgendes umfasst:
Bestimmen, durch den Datenbereitstellungs-Server, ob der Wiedergabezeitpunkt ein Snapshot-Sendezeitpunkt ist, zu dem der interaktive Anwendungsserver Snapshot-Daten sendet;
Senden, durch den Datenbereitstellungs-Server, wenn der Wiedergabezeitpunkt der Snapshot-Sendezeitpunkt ist, an den Datenanzeige-Client, der vom interaktiven Anwendungsserver zum Wiedergabezeitpunkt gesendeten Snapshot-Daten;
Zurückverfolgen, durch den Datenbereitstellungs-Server, wenn der Wiedergabezeitpunkt nicht der Snapshot-Sendezeitpunkt ist, auf einer Zeitachse ab dem Wiedergabezeitpunkt, um einen dem Wiedergabezeitpunkt nächstliegenden Snapshot-Sendezeitpunkt zu finden, Abrufen der vom interaktiven Anwendungsserver zum dem Wiedergabezeitpunkt nächstliegenden Snapshot-Sendezeitpunkt gesendeten Snapshot-Daten, wobei der nächstliegende Snapshot-Sendezeitpunkt vor dem Wiedergabezeitpunkt liegt; und
Senden, durch den Datenbereitstellungs-Server, an den Datenanzeige-Client, der vom interaktiven Anwendungsserver zum dem Wiedergabezeitpunkt nächstliegenden Snapshot-Sendezeitpunkt gesendeten Snapshot-Daten.

2. Verfahren nach Anspruch 1, wobei das Senden (104), durch den Datenbereitstellungs-Server, der Objektinteraktionsdaten an den Datenanzeige-Client die alternativ ausgeführten Schritte umfasst:
Senden (D1), durch den Datenbereitstellungs-Server, wenn der Wiedergabezeitpunkt der Snapshot-Sendezeitpunkt ist, an den Datenanzeige-Client, der vom interaktiven Anwendungsserver ab dem Wiedergabezeitpunkt zu sendenden Objektinteraktionsdaten; und
Senden (D2), durch den Datenbereitstellungs-Server, wenn der Wiedergabezeitpunkt nicht der Snapshot-Sendezeitpunkt ist, an den Datenanzeige-Client, der vom interaktiven Anwendungsserver ab dem dem Wiedergabezeitpunkt nächstliegenden Snapshot-Sendezeitpunkt zu sendenden Objektinteraktionsdaten.

3. Verarbeitungsverfahren zur Anzeige von Daten in einem Datenanzeige-Client (13), ausgeführt vom Datenanzeige-Client, wobei das Verfahren Folgendes umfasst:
Senden (201), durch den Datenanzeige-Client, einer Datenladen-Anforderung an einen Datenbereitstellungs-Server (12);
Empfangen (202), durch den Datenanzeige-Client, von Szenario-Ressourcendaten, die vom Datenbereitstellungs-Server gesendet werden, und Erstellen eines interaktiven Szenarios auf der Grundlage der Szenario-Ressourcendaten, wobei die Szenario-Ressourcendaten Grunddaten sind, die zur Erstellung des interaktiven Szenarios erforderlich sind, und nach der Erstellung des interaktiven Szenarios von einem interaktiven Anwendungsserver an den Datenbereitstellungs-Server gesendet werden;
periodisches Empfangen (203), durch den Datenanzeige-Client, von Snapshot-Daten, die vom Datenbereitstellungs-Server gesendet werden, und Laden der Snapshot-Daten in das interaktive Szenario, wobei die Snapshot-Daten vom interaktiven Anwendungsserver gemäß einem voreingestellten Snapshot-Zeitraum an den Datenbereitstellungs-Server gesendet werden und Objektstatus-Daten sind, die vom interaktiven Anwendungsserver für einen Status aller im interaktiven Szenario angezeigten Objekte erzeugt werden; und
Empfangen (204), durch den Datenanzeige-Client, von Objektinteraktionsdaten, die vom Datenbereitstellungs-Server gesendet werden, und Simulieren eines Objektinteraktionsprozesses im interaktiven Szenario auf der Grundlage der Objektinteraktionsdaten, wobei die Objektinteraktionsdaten vom interaktiven Anwendungsserver an den Datenbereitstellungs-Server gesendet werden und Echtzeit-Netzwerk-Uplink- und -Downlink-Daten sind, die vom interaktiven Anwendungsserver auf der Grundlage eines Objektinteraktionsverhaltens im interaktiven Szenario erzeugt werden,
wobei, wenn der Datenbereitstellungs-Server zu einem ersten Zeitpunkt die vom Datenanzeige-Client gesendete Datenladen-Anforderung empfängt, das Empfangen, durch den Datenanzeige-Client, vom Datenbereitstellungs-Server gesendeter Snapshot-Daten Folgendes umfasst:
Empfangen, durch den Datenanzeige-Client, wenn der erste Zeitpunkt ein Snapshot-Sendezeitpunkt ist, vom Datenbereitstellungs-Server, der vom interaktiven Anwendungsserver zum ersten Zeitpunkt gesendeten Snapshot-Daten; und
Empfangen, durch den Datenanzeige-Client, wenn der erste Zeitpunkt nicht der Snapshot-Sendezeitpunkt ist, vom Datenbereitstellungs-Server, der vom interaktiven Anwendungsserver zu einem letzten Snapshot-Sendezeitpunkt nach dem ersten Zeitpunkt gesendeten Snapshot-Daten,
oder alternativ, im Anschluss an das Empfangen (204), durch den Datenanzeige-Client, vom Datenbereitstellungs-Server gesendeter Objektinteraktionsdaten, werden die folgenden Schritte ausgeführt:
Senden, durch den Datenanzeige-Client, einer einen Wiedergabezeitpunkt umfassenden Datenladen-Anforderung an den Datenbereitstellungs-Server,
wobei, wenn der Datenbereitstellungs-Server die den Wiedergabezeitpunkt umfassende Datenladen-Anforderung zu einem zweiten Zeitpunkt empfängt, das Empfangen, durch den Datenanzeige-Client, vom Datenbereitstellungs-Server gesendeter Snapshot-Daten Folgendes umfasst:
Empfangen, durch den Datenanzeige-Client, wenn der Wiedergabezeitpunkt der Snapshot-Sendezeitpunkt ist, vom Datenbereitstellungs-Server, der vom interaktiven Anwendungsserver zum Wiedergabezeitpunkt gesendeten Snapshot-Daten; und
Empfangen, durch den Datenanzeige-Client, wenn der Wiedergabezeitpunkt nicht der Snapshot-Sendezeitpunkt ist, vom Datenbereitstellungs-Server, der vom interaktiven Anwendungsserver zu einem dem Wiedergabezeitpunkt nächstliegenden Snapshot-Sendezeitpunkt gesendeten Snapshot-Daten, wobei der nächstliegende Snapshot-Sendezeitpunkt vor dem Wiedergabezeitpunkt liegt.

4. Verfahren nach Anspruch 3, wobei das Empfangen (204), durch den Datenanzeige-Client, von Objektinteraktionsdaten, die vom Datenbereitstellungs-Server gesendet werden, Folgendes umfasst:
Empfangen (H1), durch den Datenanzeige-Client, wenn der Wiedergabezeitpunkt der Snapshot-Sendezeitpunkt ist, vom Datenbereitstellungs-Server, der vom interaktiven Anwendungsserver ab dem Wiedergabezeitpunkt zu sendenden Objektinteraktionsdaten; und
Empfangen (H2), durch den Datenanzeige-Client, wenn der Wiedergabezeitpunkt nicht der Snapshot-Sendezeitpunkt ist, vom Datenbereitstellungs-Server, der vom interaktiven Anwendungsserver ab dem dem Wiedergabezeitpunkt nächstliegenden Snapshot-Sendezeitpunkt zu sendenden Objektinteraktionsdaten.

5. Datenbereitstellungs-Server (12), umfassend:
einen Speicher, konfiguriert zum Speichern von durch einen Computer ausführbaren Programmcodes;
eine Netzwerkschnittstelle; und
einen Prozessor, der mit dem Speicher und der Netzwerkschnittstelle gekoppelt ist, wobei
die Programmcodes Anweisungen umfassen, und wenn der Prozessor die Anweisungen ausführt, die Anweisungen den Datenbereitstellungs-Server veranlassen, das vom Datenbereitstellungs-Server ausgeführte Verfahren nach Anspruch 1 oder 2 durchzuführen.

6. Datenanzeige-Client (13), umfassend:
einen Speicher, konfiguriert zum Speichern von durch einen Computer ausführbaren Programmcodes;
einen Sender-Empfänger; und
einen Prozessor, der mit dem Speicher und dem Sender-Empfänger gekoppelt ist, wobei
die Programmcodes Anweisungen umfassen, und wenn der Prozessor die Anweisungen ausführt, die Anweisungen das Terminal veranlassen, das vom Datenanzeige-Client ausgeführte Verfahren nach Anspruch 3 oder 4 durchzuführen.

7. Computerspeichermedium, das Computersoftware-Anweisungen speichert, wobei die Computersoftware-Anweisungen ausgeführt werden, um das vom Datenbereitstellungs-Server ausgeführte Verfahren nach Anspruch 1 oder 2 durchzuführen.

8. Computerspeichermedium, das Computersoftware-Anweisungen speichert, wobei die Computersoftware-Anweisungen ausgeführt werden, um das vom Datenanzeige-Client ausgeführte Verfahren nach Anspruch 3 oder 4 durchzuführen.

## Revendications

1. Un procédé de traitement pour l'affichage de données dans un client d'affichage de données (13), exécuté par un serveur de fourniture de données (12), le procédé de traitement comprenant :
la réception (101), par le serveur de fourniture de données, de données de ressource de scénario envoyées par un serveur d'application interactif après la création d'un scénario interactif, dans lequel les données de ressource de scénario sont des données de base nécessaires à la création du scénario interactif ;
la réception périodique (101), par le serveur de fourniture de données, de données d'instantané envoyées par le serveur d'application interactif selon une période d'instantané prédéfinie, dans lequel les données d'instantané sont des données d'état d'objet générées par le serveur d'application interactif pour un état de tous les objets affichés dans le scénario interactif ; la réception (102), par le serveur de fourniture de données, d'une requête de chargement de données envoyée par le client d'affichage de données ;
l'envoi (103), par le serveur de fourniture de données, des données de ressource de scénario au client d'affichage de données en réponse à la requête de chargement de données ;
l'envoi (103), par le serveur de fourniture de données, des données d'instantané au client d'affichage de données ; et
l'envoi (104), par le serveur de fourniture de données, si le serveur de fourniture de données met en mémoire tampon des données d'interaction d'objet générées par le serveur d'application interactif, des données d'interaction d'objet au client d'affichage de données, dans lequel les données d'interaction d'objet sont des données de liaison montante et descendante en réseau en temps réel générées par le serveur d'application interactif sur la base d'un comportement d'interaction d'objet dans le scénario interactif,
dans lequel si le serveur de fourniture de données reçoit, à un premier instant, la requête de chargement de données envoyée par le client d'affichage de données, l'envoi, par le serveur de fourniture de données, des données de ressource de scénario au client d'affichage de données en réponse à la requête de chargement de données comprend :
l'envoi, par le serveur de fourniture de données, des données de ressource de scénario au client d'affichage de données en temps réel après réception de la requête de chargement de données au premier instant, dans lequel l'envoi, par le serveur de fourniture de données, des données d'instantané au client d'affichage de données comprend :
la détermination, par le serveur de fourniture de données, si le premier instant est un instant d'envoi d'instantané auquel le serveur d'application interactif envoie des données d'instantané ;
l'envoi, par le serveur de fourniture de données si le premier instant est l'instant d'envoi d'instantané, au client d'affichage de données, des données d'instantané envoyées par le serveur d'application interactif au premier instant ;
l'attente, par le serveur de fourniture de données, à partir du premier instant si le premier instant n'est pas l'instant d'envoi d'instantané, jusqu'à la réception des données d'instantané envoyées par le serveur d'application interactif à un dernier instant d'envoi d'instantané après le premier instant ; et
l'envoi, par le serveur de fourniture de données, au client d'affichage de données, des données d'instantané envoyées par le serveur d'application interactif au dernier instant d'envoi d'instantané après le premier instant,
ou, alternativement, à la suite de l'envoi (104), par le serveur de fourniture de données, des données d'interaction d'objet au client d'affichage de données, les étapes suivantes sont exécutées :
dans lequel si le serveur de fourniture de données reçoit, à un deuxième instant, une requête de chargement de données comprenant un instant de lecture envoyée par le client d'affichage de données, l'instant de lecture étant antérieur au deuxième instant, l'envoi, par le serveur de fourniture de données, des données d'instantané au client d'affichage de données comprend :
la détermination, par le serveur de fourniture de données, si l'instant de lecture est un instant d'envoi d'instantané auquel le serveur d'application interactif envoie des données d'instantané ;
l'envoi, par le serveur de fourniture de données si l'instant de lecture est l'instant d'envoi d'instantané, au client d'affichage de données, des données d'instantané envoyées par le serveur d'application interactif à l'instant de lecture ;
le retour en arrière, par le serveur de fourniture de données si l'instant de lecture n'est pas l'instant d'envoi d'instantané, sur un axe temporel à partir de l'instant de lecture pour trouver un instant d'envoi d'instantané le plus proche de l'instant de lecture, l'obtention des données d'instantané envoyées par le serveur d'application interactif à l'instant d'envoi d'instantané le plus proche de l'instant de lecture, l'instant d'envoi d'instantané le plus proche étant antérieur à l'instant de lecture ; et
l'envoi, par le serveur de fourniture de données, au client d'affichage de données, des données d'instantané envoyées par le serveur d'application interactif à l'instant d'envoi d'instantané le plus proche de l'instant de lecture.

2. Le procédé selon la revendication 1, dans lequel l'envoi (104), par le serveur de fourniture de données, des données d'interaction d'objet au client d'affichage de données comprend, avec les étapes exécutées alternativement :
l'envoi (D1), par le serveur de fourniture de données si l'instant de lecture est l'instant d'envoi d'instantané, au client d'affichage de données, des données d'interaction d'objet à envoyer par le serveur d'application interactif à partir de l'instant de lecture ; et
l'envoi (D2), par le serveur de fourniture de données si l'instant de lecture n'est pas l'instant d'envoi d'instantané, au client d'affichage de données, des données d'interaction d'objet à envoyer par le serveur d'application interactif à partir de l'instant d'envoi d'instantané le plus proche de l'instant de lecture.

3. Un procédé de traitement pour l'affichage de données dans un client d'affichage de données (13), exécuté par le client d'affichage de données, le procédé comprenant :
l'envoi (201), par le client d'affichage de données, d'une requête de chargement de données à un serveur de fourniture de données (12) ;
la réception (202), par le client d'affichage de données, de données de ressource de scénario envoyées par le serveur de fourniture de données, et la création d'un scénario interactif sur la base des données de ressource de scénario, dans lequel les données de ressource de scénario sont des données de base nécessaires à la création du scénario interactif, et sont envoyées au serveur de fourniture de données par un serveur d'application interactif après la création du scénario interactif ;
la réception périodique (203), par le client d'affichage de données, de données d'instantané envoyées par le serveur de fourniture de données, et le chargement des données d'instantané dans le scénario interactif, dans lequel les données d'instantané sont envoyées au serveur de fourniture de données par le serveur d'application interactif selon une période d'instantané prédéfinie, et sont des données d'état d'objet générées par le serveur d'application interactif pour un état de tous les objets affichés dans le scénario interactif ; et
la réception (204), par le client d'affichage de données, de données d'interaction d'objet envoyées par le serveur de fourniture de données, et la simulation d'un processus d'interaction d'objet dans le scénario interactif sur la base des données d'interaction d'objet, dans lequel les données d'interaction d'objet sont envoyées au serveur de fourniture de données par le serveur d'application interactif, et sont des données de liaison montante et descendante en réseau en temps réel générées par le serveur d'application interactif sur la base d'un comportement d'interaction d'objet dans le scénario interactif,
dans lequel si le serveur de fourniture de données reçoit, à un premier instant, la requête de chargement de données envoyée par le client d'affichage de données, la réception, par le client d'affichage de données, de données d'instantané envoyées par le serveur de fourniture de données comprend :
la réception, par le client d'affichage de données si le premier instant est un instant d'envoi d'instantané, en provenance du serveur de fourniture de données, des données d'instantané envoyées par le serveur d'application interactif au premier instant ; et
la réception, par le client d'affichage de données si le premier instant n'est pas l'instant d'envoi d'instantané, en provenance du serveur de fourniture de données, des données d'instantané envoyées par le serveur d'application interactif à un dernier instant d'envoi d'instantané après le premier instant,
ou, alternativement, à la suite de la réception (204), par le client d'affichage de données, de données d'interaction d'objet envoyées par le serveur de fourniture de données, les étapes suivantes sont exécutées :
l'envoi, par le client d'affichage de données, d'une requête de chargement de données comprenant un instant de lecture au serveur de fourniture de données,
dans lequel si le serveur de fourniture de données reçoit la requête de chargement de données comprenant l'instant de lecture à un deuxième instant, la réception, par le client d'affichage de données, de données d'instantané envoyées par le serveur de fourniture de données comprend :
la réception, par le client d'affichage de données si l'instant de lecture est l'instant d'envoi d'instantané, en provenance du serveur de fourniture de données, des données d'instantané envoyées par le serveur d'application interactif à l'instant de lecture ; et
la réception, par le client d'affichage de données si l'instant de lecture n'est pas l'instant d'envoi d'instantané, en provenance du serveur de fourniture de données, des données d'instantané envoyées par le serveur d'application interactif à un instant d'envoi d'instantané le plus proche de l'instant de lecture, l'instant d'envoi d'instantané le plus proche étant antérieur à l'instant de lecture.

4. Le procédé selon la revendication 3, dans lequel la réception (204), par le client d'affichage de données, de données d'interaction d'objet envoyées par le serveur de fourniture de données comprend :
la réception (H1), par le client d'affichage de données si l'instant de lecture est l'instant d'envoi d'instantané, en provenance du serveur de fourniture de données, des données d'interaction d'objet à envoyer par le serveur d'application interactif à partir de l'instant de lecture ; et
la réception (H2), par le client d'affichage de données si l'instant de lecture n'est pas l'instant d'envoi d'instantané, en provenance du serveur de fourniture de données, des données d'interaction d'objet à envoyer par le serveur d'application interactif à partir de l'instant d'envoi d'instantané le plus proche de l'instant de lecture.

5. Un serveur de fourniture de données (12), comprenant :
une mémoire, configurée pour stocker des codes de programme exécutables par ordinateur ;
une interface réseau ; et
un processeur, couplé à la mémoire et à l'interface réseau, dans lequel les codes de programme comprennent des instructions, et lorsque le processeur exécute les instructions, les instructions amènent le serveur de fourniture de données à exécuter le procédé exécuté par le serveur de fourniture de données selon la revendication 1 ou 2.

6. Un client d'affichage de données (13), comprenant :
une mémoire, configurée pour stocker des codes de programme exécutables par ordinateur ;
un émetteur-récepteur ; et
un processeur, couplé à la mémoire et à l'émetteur-récepteur, dans lequel les codes de programme comprennent des instructions, et lorsque le processeur exécute les instructions, les instructions amènent le terminal à exécuter le procédé exécuté par le client d'affichage de données selon la revendication 3 ou 4.

7. Un support de stockage informatique stockant des instructions logicielles informatiques, dans lequel les instructions logicielles informatiques sont exécutées pour mettre en œuvre le procédé exécuté par le serveur de fourniture de données selon la revendication 1 ou 2.

8. Un support de stockage informatique stockant des instructions logicielles informatiques, dans lequel les instructions logicielles informatiques sont exécutées pour mettre en œuvre le procédé exécuté par le client d'affichage de données selon la revendication 3 ou 4.
